(19)

**Europäisches Patentamt**
**European Patent Office**
**Office européen des brevets**

(11) **EP 4 264 336 B1**

(12) **EUROPEAN PATENT SPECIFICATION**

(45) Date of publication and mention
of the grant of the patent:
**28.01.2026 Bulletin 2026/05**

(21) Application number: **21843893.5**

(22) Date of filing: **17.12.2021**

(51) International Patent Classification (IPC):
**G02B 3/08** *(2006.01)*     **G02B 27/09** *(2006.01)*

(52) Cooperative Patent Classification (CPC):
**G02B 27/0927; G02B 3/08; G02B 27/0966**

(86) International application number:
**PCT/EP2021/086631**

(87) International publication number:
**WO 2022/129596 (23.06.2022 Gazette 2022/25)**

(54) **OPTICAL DEVICE FOR CONTROLLING A LIGHT BEAM**

OPTISCHE VORRICHTUNG ZUR STEUERUNG EINES LICHTSTRAHLS

DISPOSITIF OPTIQUE POUR COMMANDER UN FAISCEAU LUMINEUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.12.2020  AT 511132020**

(43) Date of publication of application:
**25.10.2023  Bulletin 2023/43**

(73) Proprietor: **TECHNISCHE UNIVERSITÄT WIEN**
**1040 Wien (AT)**

(72) Inventors:
• **SAGHAFI, Saiedeh**
  **1040 Wien (AT)**
• **BECKER, Klaus**
  **1040 Wien (AT)**
• **DODT, Hans - Ulrich**
  **1040 Wien (AT)**

(74) Representative: **Wallinger Ricker Schlotter
Tostmann
Patent- und Rechtsanwälte Partnerschaft mbB
Zweibrückenstraße 5-7
80331 München (DE)**

(56) References cited:
**JP-A- 2005 257 735     JP-A- 2008 137 058
US-A- 3 476 463**

• **SHAFER ET AL: "Gaussian to flat-top intensity
distributing lens", OPTICS AND LASER
TECHNOLOGY, ELSEVIER SCIENCE
PUBLISHERS BV., AMSTERDAM, NL, vol. 14, no.
3, 1 June 1982 (1982-06-01), pages 159 - 160,
XP024516812, ISSN: 0030-3992, [retrieved on
19820601], DOI: 10.1016/0030-3992(82)90113-X**

**Description**

The invention concerns an optical device for controlling a light beam comprising:

- a beam shaping unit for increasing the uniformity of the spatial intensity profile of the light beam;
- a lens system; and
- a focusing unit.

Such systems are known for providing a focused light beam with an increased spatial intensity profile uniformity. For a wide range of laser applications in industry, medicine, biology, physics, chemistry as well as interdisciplinary fields such as biotechnology, biophotonics, optomechanics, or even mechatronics, a usually coherent or semi-coherent beam with specific optical characteristics and a specific spatial profile is required.

A known optical device for controlling a Gaussian light beam is disclosed by JP 2005 257735 A.

Despite many methods generating a highly focused beam used in communications, medical surgery, micromachining, material processing, and welding, there still are various challenging knots in achieving isotropic volumetric results. This even becomes more pronounced when a plane of uniform light is required as by increasing the dimensions of the plane the beam width expands rapidly compared to the plane of focus. In applications such as rapid annihilation of nano-organism and microorganism using high-frequency light, pollution analysis in microbiology and oceanography, high-resolution light-sheet fluorescence microscopy, wound healing in immunocompromised patients like diabetics, cancer, and transplants patients, there is a need for a sheet of light with minimum width, minimum divergence, and uniform intensity distribution along all axes to obtain the optimum results from the process.

In most commercial techniques that require a highly focused beam, a laser (solely or in combination with some optical elements) emitting a highly narrow beam with either Gaussian, super-Gaussian, or a sort of Bessel beam intensity profile is utilized. However, many undesired optical effects exist that undermine the quality of the process. For example, for clean-cutting or precise welding using the focused laser beams of these distributions, the existence of the side-shoulders around the central peak at the focal plane would substantially degrade the quality of the work. Replacing refractive lenses with diffractive optical elements (DOE) is an alternative approach, however, the optical diffraction efficiency, parasitic diffraction orders, and high costs are among the disadvantages of using DOEs solely.

It is an object of the present invention to alleviate or resolve one or more of the disadvantages in the prior art. In particular, it is an object of the present invention to provide an optical device for controlling a light beam which provides a focused light beam of improved optical characteristics, in particular with improved uniformity along one or all axes, reduced side-shoulders, reduced width, reduced divergence, a longer working distance, a higher focusing efficiency, a lower numerical aperture and/or an extended depth of the produced light field.

This is achieved by an optical device as defined in appended claim 1, wherein the lens system comprises a first lens and a second lens, wherein each of the first lens and the second lens comprises a stepped optical surface formed by active sections and reset sections alternating with each other, wherein the active sections stepwise form a surface profile, which is aspheric, wherein the stepped optical surface of the first lens faces the stepped optical surface of the second lens.

The first lens and the second lens are Fresnel or Fresnel-like lenses, but with an aspheric surface profile. A Fresnel lens has the advantage of being able to be fabricated on thin, lightweight substrates while maintaining high diffraction-efficiency and excellent optical quality. The first and second lens control the refraction phenomenon in stepwise discontinuities. Thus, the Rayleigh range (the area wherein the beam width increases by a factor of $\sqrt{2}$) is extended beyond the value provided by conventional systems. The optical device allows a focusing into either a highly focused spot or to a very thin sheet of light. Also, the working distance is increased and the side-shoulders in the spatial intensity profile can be reduced. Furthermore, the predictability of the beam distribution is improved. Additionally, the use of aspheric surface profiles allows forming a distortion-free image with less aberration compared to spherical or cylindrical lenses. Further, two aspheric lenses facing each other can convert a Gaussian beam into a beam with uniform intensity distribution. Therein, the intensity distribution is reshaped by the first (aspheric) lens and the second (aspheric) lens corrects the phase.

The optical device is in particular for focusing the light beam to a spot (in particular substantially on a point) or a sheet of light (in particular substantially on a line). Therefore, the elements of the optical device, in particular, the beam shaping unit, the first lens, the second lens, and/or the focusing unit, are in particular rotational symmetrical or cylindrical symmetrical (i.e. reflectional symmetry about a plane). The focusing unit is in particular for focusing the light beam on a spot or a sheet, in particular substantially a line. The optical device is in particular for controlling a coherent light beam (e.g. a laser beam) or a semi-coherent light beam (e.g. emitted by optically altered ultraviolet-visible LED modules equipped with a small lens, heat sink, power supply, cooling fan, and power cord emitting parallel intensive light). The first lens and/or the second lens may (respectively) comprise a plane optical surface opposite the stepped optical surface. The first lens is in particular a complex optical conic-aspheric-Fresnel element. The second lens is in particular a complex optical conic-aspheric-Fresnel element.

The active sections of the first lens and the second lens are curved and the reset section of the first lens and the second lens are planar/flat. Preferably, the reset sections reset the optical surface of the first and the second lens such that the sag of the optical surface is the same on the end of each active section, which end faces a symmetry axis of the respective lens. Preferably, the contact points of the active sections with the reset section on the active sections one end (with regard to a symmetry axis) are on a plane and the contact points of the active sections with the reset sections on the active sections other end (with regard to a symmetry axis) are on another plane. Preferably, the active sections and reset sections of the first and second lens form a zigzag in a cross-section through a symmetry axis of the respective lens (i.e. trace a path between two parallel lines), wherein in particular the active sections form curved lines and/or the reset sections form straight lines. Preferably, the active section and reset sections of the first lens and the second lens are ring-shaped (in particular radial/homocentric) segments, thereby focusing light on a point, or are straight/axial segments, thereby focusing light on a line. The first and the second lens may each have the form of a slab/rectangle or of a disk. The surface profile stepwise formed by the active sections of the first lens and/or the surface profile stepwise formed by the active sections of the second lens is preferably convex.

The first and/or the second lens may be a conic-aspheric-Fresnel lens. The stepped optical surface of the first and/or the second lens may have complex structures that are designed specifically using the combination of meso-aspheric optical structures and conic-structured-stepped-phase symmetrical elements. Preferably, a central part of the stepped optical surface of the first lens and the second lens, respectively, has a rotationally symmetric conic shape (thus, a focused light spot can be provided) or has a conic shape along one plane (thus, a sheet of light can be provided). In particular, there is at least one active section which borders with one reset section on its one end and with another reset section on its other end. Preferably, there are at least two, at least three, at least four or at least five active sections, wherein each of the active sections borders on its one end with one reset section and on its other end with another reset section.

In the first lens and the second lens, in particular the direction of propagation of light does not change within the medium (unless scattered), but the light only deviates in a particular direction depending on the lenses' structure providing a better focusing performance. For example, a higher rate of active and reset section (i.e. of grooves) provides better image quality.

Besides, the first and second lens provide a controllable optical system for desired phases and amplitudes, while providing a good magnification and a high amount of light collection. The rays are in particular diffracted and entrapped inside the respective lens to manipulate the phase and amplitude.

Preferably, under the uniformity of the spatial intensity profile is understood the beam uniformity ($U_\eta$) as defined in ISO 13694:2018 for cw-beams, wherein $\eta$ is 0.3 and lower (i.e. closer to 0) $U_\eta$ means higher beam uniformity. $U_\eta$ is optionally reduced by the influence of the beam shaping unit by at least 0.01, at least 0.1 or by at least 0.2. Optionally, the beam uniformity is (additionally or alternatively) increased (and therefore $U_\eta$ decreased) for $\eta$ being one of 0.1, 0.2, 0.4, 0.5, 0.6 or 0.7. This measure is to be applied under the assumption that the light beam supplied to the beam shaping unit is a Gaussian beam.

The intensity distribution of the light beam at the focused area in both cases (i.e. spot or light sheet) has in particular a top-hat profile and can be approximated theoretically with a Flattened Gaussian beam (FGB) distribution, thus, no strong side-shoulder can be detected either in near-field or in far-field making it a perfect candidate for applications such as clean-cut, welding, micromachining, photonics, the annihilation of microorganism or highly precise medical surgery. The focusing efficiency of the first lens and the second lens of the lens system depends on the degree of their conical part as well as how the phase profile is fabricated. Depending on the shape of the center of the respective lens surrounded by Fresnel zones, the optical characteristics of the focused beam would be different. If the center part has a symmetrical conic shape (e.g. like an Axicon) with a fan-angle of $\beta$, then a highly focused spot could be formed. However, if the center part has a conic shape along one plane (like what we see in line-generator elements), then a sheet of light could be formed. Producing a super thin light sheet or highly focused spot has a significant impact if the Rayleigh range (the area when the beam width increases by a factor of $\sqrt{2}$) is extended beyond the value provided by the conventional standard systems. For controlling the expansion, the second lens creates an extra phase shift along the y-axis and forces an angular momentum similar to what we confront in the twisted beam preventing the beam from expansion along the propagating axis.

In accordance with the claimed invention, the surface profile stepwise formed by the active sections of respectively the first lens and/or the second lens is substantially oblate elliptical in a cross-section through a symmetry axis (or symmetry plane) of the respective first lens and/or second lens. I.e., it corresponds to the oblate section of an ellipse. The symmetry axis may in particular be the optical axis.

It is preferable if the surface profile stepwise formed by the active sections of the first lens is defined by the sag z(r) in a cross-section through a symmetry axis of the surface profile, with r being the displacement from the symmetry axis of the surface profile, wherein

$$z = \frac{cr^2}{1+\sqrt{1-(1+k)c^2r^2}} + \alpha_1 r^2 + \alpha_2 r^4 + \alpha_3 r^6 + \alpha_4 r^8 + \alpha_5 r^{10} + \alpha_6 r^{12} + \alpha_7 r^{14} + \alpha_8 r^{16}$$

wherein

the radius of curvature R=1/c is between 2.5 and 130,
the conic constant k is between 0.005 and 3,
the absolute value of $\alpha_1$ is between 0 and 0.1,
the absolute value of $\alpha_2$ is between 0 and 0.1, and
the absolute value $\alpha_i$ is between 0 and 0.02 for (i=3,4,5,6,7,8). The symmetry axis is preferably the optical axis of the first lens. Thus, particularly good optical characteristics are achieved. Preferably, R is between 5 and 65. Preferably, k is between 0,01 and 1,5. Preferably, $\alpha_1$=0,0002, $\alpha_2$=0,002 and/or $\alpha_i$ is less than 0.01, more preferably less than 0.001, in particular 0, for (i=3,4,5,6,7,8). The first lens can comprise a material with an isotropic or anisotropic optical index. The thickness of the first lens is preferably chosen such that the absolute value of the thickness exceeds the deepest groove depth formed between active and reset sections. In particular, the first lens is between 1 and 2000 mm thick. The conic constant k is given by k=-$e^2$, where e is the eccentricity of the conic section.

Depth/-Frequency-parameter: If this parameter is positive, then it corresponds to the depth of each groove in lens units. If negative, then it corresponds to the frequency of the grooves (which corresponds to the number of reset section or the number of the active sections). For example, a value of -2.0 will yield 2 grooves per radial/axial lens unit. If the groove depth is defined, the radial positions of the grooves will generally vary; if the groove frequency is defined; the groove depth will vary. Preferably, the depth/frequency-parameter of the stepped optical surface of the first lens is between $\pm 0.05$ and $\pm (1/3)$.

Pitch-parameter (in degrees): The pitch is the angle the reset sections ("inactive" faces) (those faces nominally parallel to the symmetry axis) make concerning the symmetry axis. The pitch is generally radially outward, no matter if the pitch angle is positive or negative. The pitch-parameter of the inactive sections of the first lens is preferably between 2° and 45°.

It is advantageous if the surface profile stepwise formed by the active sections of the second lens is defined by the sag z(r) in a cross-section through a symmetry axis of the surface profile, with r being the displacement from the symmetry axis of the surface profile, wherein

$$z = \frac{cr^2}{1+\sqrt{1-(1+k)c^2r^2}} + \alpha_1 r^2 + \alpha_2 r^4 + \alpha_3 r^6 + \alpha_4 r^8 + \alpha_5 r^{10} + \alpha_6 r^{12} + \alpha_7 r^{14} + \alpha_8 r^{16}$$

wherein

the radius of curvature R=1/c is between 2.5 and 130,
the conic constant k is between 0.01 and 5,
the absolute value of $\alpha_1$ is between 0 and 0.1,
the absolute value of $\alpha_2$ is between 0 and 0.1, and
the absolute value of $\alpha_i$ is between 0 and 0.01 for (i=3,4,5,6,7,8). The symmetry axis is preferably the optical axis of the second lens. Thus, particularly good optical characteristics are achieved. Preferably, R is between 5 and 65. Preferably, k is between 0,02 and 3. Preferably, $\alpha_1$=0,0002, $\alpha_2$=0,002 and/or $\alpha_i$ is less than 0.01, more preferably less than 0.001, in particular 0, for (i=3,4,5,6,7,8). The first lens can comprise a material with an isotropic or anisotropic optical index. The thickness of the second lens is preferably chosen such that the absolute value of the thickness exceeds the deepest groove depth formed between active and reset sections. In particular, the second lens is between 1 and 2000 mm thick. Preferably, the depth/frequency-parameter of the stepped optical surface of the second lens is between $\pm 0.01$ and $\pm 1$. The pitch-parameter of the inactive sections of the first lens is preferably between 2° and 22.5°.

It is preferable if the first lens and the second lens are each rotation-symmetrical (around an optical axis). Thus, light is focused on a point and a spot of light is provided. In this case, the active section and the reset sections of the first lens and the second lens are in particular radial facets.

Alternatively, it is preferable if the first lens and the second lens are each a general cylindrical lens. Thus, a sheet of light can be provided for and the light is in particular focused on a line. In this case, the active sections and reset sections form in particular axial facets. Under general cylindrical is understood that the respective lens is reflectional symmetrical but at least one of its faces is the section of a generalized cylinder (i.e. the base surface of which does not need to be a circle). In particular, the surface profile formed by the active sections of the first and/or the second lens has the form of a section of a generalized cylinder.

In an advantageous embodiment, the stepped optical surface of the second lens comprises a larger number of active sections and reset sections alternating with each other per axial or radial length unit than the stepped optical surface of the first lens. At the same time, preferably, the depth of the grooves in the stepped optical surface of the second lens is preferably smaller than the depth of the grooves in the stepped optical surface of the first lens. When the number of the active and reset sections (and, therefore, the frequency of active and reset sections) is increased, and preferable at the same the depth and pitch (angle) of the slope of the grooves, in particular of the reset sections, becomes smaller, this helps the light to be guided through the focusing unit with the highest precision.

In a preferable embodiment, the second lens is placed at a distance of between 0.001 mm and 1000 mm from the first lens. Preferably, the first and second lenses are arranged such that a light beam exiting the first lens reaches the second lens without interfering with another optical element. I.e., preferably, there is provided for free-space between the first lens and the second lens.

According to the claimed invention, the beam shaping unit is configured for converting a Gaussian beam into a flattened Gaussian beam, in particular a beam with a top-hat beam profile. Considering that most commercial lasers operate in TEM00 mode, the beam shaping unit can be used to convert a Gaussian beam into a beam with a top-hat beam profile. If we consider the light beam as a bundle of individual rays with its specific propagating vector, at each arbitrary position, according to the principle of the superposition, the superimposing of their phase and amplitude would give us the profile of the whole beam at that point. Thus, the beam shaping unit may be used to convert the Gaussian beam into a beam the distribution of which can be approximated by a Flattened-Gaussian beam, in particular with the desired mode number, controlling the uniformity of the intensity distribution and the slope of the beam profile's shoulder.

It is advantageous if the beam shaping unit comprises at least a negative lens and a positive lens, wherein optionally the negative lens and/or the positive lens are achromatic and/or aspheric. The beam shaping unit may also comprise a third lens. The negative lens of the beam shaping unit diverges the center of Gaussian beam distribution more than the tail of the distribution and the positive lens of the beam shaping unit collects them and redistributes them in a uniform shape through parallel paths. Thus, the uniformity of the light beam can be increased in a particularly efficient way. The negative and the third lens of the beam shaping unit may be cemented elements and the negative lens, optionally in combination with the third lens, may provide superior color correction and the smallest RMS spot size closest to the diffraction limit. The positive lens of the beam shaping unit may reduce wavefront errors arising from standard spherical achromats. Concerning the beam shaping unit reference is made to the paper "Gaussian to Flat-Top Intensity Distributing Lens" by David Shafer Optical Design, Inc.; 56 Drake Lane; Fairfield, Connecticut 06430; (203) 259-4929. The positive lens of the beam shaping unit is preferably a first condenser lens and the third lens of the beam shaping unit is preferably a second condenser lens. Aspheric lenses can form a distortion-free image with less aberration compared to spherical lenses. The beam shaping unit may produce a narrow elliptical beam with quasi-uniform intensity distribution. However, to use this beam, it must be transformed into a thin light sheet at the area of interest along the z-axis, which is achieved by the lens system and the focusing unit.

A positive lens is positive in at least one axis, preferably both axes. A negative lens is negative in at least one axis, preferably both axes.

It is preferable that the beam shaping unit comprises a condenser (i.e. in particular the third lens mentioned above), wherein the positive lens is arranged in the optical path of the light beam between the negative lens and the condenser lens.

It is preferable if the focusing unit comprises at least a positive lens, which is preferably aspheric and/or achromatic. The focusing unit comprises preferably at least one, more preferably at least two further lenses, which are in particular aspheric and/or achromatic. The at least one or at least two further lenses may create pre-defined distances between the bundle of rays of the light beam with phase correlation. With the positive lens of the focusing unit, the light beam is focused on the plane that is considered as the focusing plane containing a minimum width for either a light sheet or a highly focused point. Preferably, the positive lens of the focusing unit is arranged optically after the further lens(es) of the focusing unit.

In an advantageous embodiment, the optical device (in particular the lens system) comprises an aperture, in particular a soft aperture. Preferably, the aperture is arranged optically between the first lens and the second lens of the lens system.

Optionally, the lens system is arranged in the optical path of the light beam between the beam shaping unit and the focusing unit.

In a preferable embodiment, the optical device comprises a light source. The light source is optionally coherent or semi-coherent. For example, the light source may be a laser. Preferably, the beam shaping unit is arranged in the optical path of the light beam (which may be emitted by the light source) closer to the light source than the lens system and the focusing unit.

In some embodiments, the beam shaping unit and the first lens are fixedly joined together, e.g. by way of cementing, to form a first combined optical unit through which the light beam can pass through both the beam shaping unit and the first lens along a light propagation axis of the first combined optical unit ; and/or the focussing unit and the second lens are fixedly joined together, e.g. by way of cementing, to form a second combined optical unit through which the light beam can pass through both the focussing unit and the second lens along a light propagation axis of the second combined optical unit This allows for a very compact design of the optical device, which may particularly be useful for applications with challenging space requirements, e.g. handheld devices or wearable devices (so-called "wearables") e.g. glasses having laser projectors for projecting images into the field of view of a person wearing the glasses. Furthermore, installing of the optical device within a system, e.g. a projecting system or a medical device, is simplified because less separate parts need to be handled, put in place and aligned with one another. Particularly, also such a compact designs enables a beam shaping where the output beam is a highly focussed beam with a very small minimum spot-size, optimized optical characteristics such as minimum aberration, scattering, and divergence while maintaining a high degree of uniformity of its intensity profile along a direction being perpendicular to the direction of the output beam. Furthermore, the design of these embodiments enables an apochromatic focussing of light of different wavelengths in the visible range of the electromagnetic spectrum, i.e. a focussing on a same focal point or focal line.

The term "fixedly joined together", as used herein, refers particularly to two bodies, here specifically optical elements, being connected to each other in such a way that their relative position and orientation is fixed by means of the joining. By way of example, the optical elements may be joined to form a unit by means of a suitable (transparent)cement for fixing a surface of a first one of the optical elements to a facing surface of the other one of the optical elements to be joined.

In some embodiments, the first combined optical unit comprises: (i) a first optical element having aspheric-conic front surface for initial alteration of the phase and amplitude of the incident light beam when it enters the first optical element through the front surface; (ii) a second optical element having a different refractive index than the first optical element and having an extended-aspheric structure to refract the light beam by the second optical element in a manner defined by the structure; and (iii)a third optical element being or comprising the first lens. Such a design of the first combined optical unit may be manufactured in an extremely space-efficient manner, particularly when it consists of only the first, second and third optical elements which together define already the required functionality of the beam shaping unit and the first lens of the optical device according to the present solution.

In some embodiments, the first lens is a conic-aspheric-Fresnel element for parallelizing the light beam by the third optical element and for defining a specific direction along which the parallelized light beam leaving the first combined optical unit towards the second combined optical unit after its propagation through the third optical element.

In some embodiments, the first optical element is a rotational-symmetric or cylindrical-symmetric optical element, wherein its front surface has an even-aspheric structure and its back surface located opposite to the front surface has an extended aspheric structure. While in the case of a rotational-symmetric (first)optical element, a highly focussed light beam having a rotational-symmetric geometry (cross-section) may be formed, the case of a cylindrical-symmetric optical element is suitable to form a substantially two-dimensional light sheet.

The term "even-aspheric structure", as used herein, refers to an aspheric structure the zag $z(r)$ of which comprises non-zero coefficients $\alpha$ solely for one or more even orders $\alpha_{2i}$.

In some embodiments, the first optical element has at least one of the following properties:

- its front surface has a radius of curvature ($R=1/c$) between 2.5 mm and 1500 mm;
- its back surface has a radius of curvature ($R=1/c$) between - 1000 mm and 1000 mm;
- it comprises, and may specifically consist of, a medium having a refractive index n with $1.45 \leq n \leq 2$, such as Resnik material (LF8), and a thickness d with $1\,mm \leq d \leq 250\,mm$;
- a conic constant k of its aspheric-conic front surface is between 0.01 and 5;
- for the zag $z(r)$ of the even aspheric structure, the absolute value of its second-order coefficient $\alpha_2$ is between 0 and 0.1, the absolute value of the fourth-order coefficient $\alpha_4$ is between 0 and 0.1, and/or the absolute value of each of its even-order coefficients $\alpha_{2i}$ for $i \in \{3,4,5,6,7,8\}$is between 0 and 0.1.

The above parameters define preferred values and ranges of values that allow for a particularly efficient and compact design of the optical device for controlling a light beam.

In some embodiments, the second optical element has a front surface that faces the first optical element and has an extended aspheric structure.

The term "extended aspheric structure", as used herein, refers to a spatially extended structure having an aspheric surface.

In some embodiments, the second optical element has at least one of the following properties:

- its front surface has a radius of curvature between -1000 mm and 1000mm;
- it comprises, and may specifically consist of, a medium, such as Lanthanum of low-index material (S-LAL8,) having a refractive index n with $1.45 \leq n \leq 2.2$ and a thickness d with $1mm \leq d \leq 500\,mm$;
- a conic constant k of its extended-aspheric structure is between 0.01 and 1;
- for the zag $z(r)$ of the extended aspheric structure the absolute value of its second-order coefficient $\alpha_2$ is between 0 and 0.1, the absolute value of its fourth-order coefficient $\alpha_4$ is between 0 and 0.1, and/or the absolute value of each of its even-order coefficients $\alpha_{2i}$ for i $\in$ {3,4,5,6,7,8} is between 0 and 0.1.

In some embodiments, the first lens (6) has at least one of the following properties:

- a radius of curvature of its stepped optical surface is between 2.5 mm and 130 mm,
- a conic constant k of its stepped optical surface is between 0.005 and 3;
- for the zag z(r) of its stepped optical surface, the absolute value of its first-order coefficient $\alpha_1$ is between 0 and 0.1, the absolute value of its second-order coefficient $\alpha_2$ is between 0 and 0.1, and/or
- the absolute value of each of its higher-order coefficients $\alpha_i$ for i $\in$ {3,4,5,6,7,8}is between 0 and 0.1.

Also the above parameters define preferred values and ranges of values that allow for a particularly efficient and compact design of the optical device for controlling a light beam.

In some embodiments, the first combined optical unit is configured to convert an incident light beam in such a way into an output beam leaving the first combined optical unit through the stepped surface of the first lens that an intensity profile along a direction being perpendicular to a principal direction of the output beam can be mathematically described by a flattened-Gaussian beam, FGB, of low order as follows (Equation 1):

$$\psi_N(r,z) \approx \frac{w_N(0)}{w_N(z)} e^{\left(i\left(kz - \Phi_N(z) + \frac{k}{2R_N(z)}\right)\right)} e^{\left(\frac{-r^2}{w_N^2(z)}\right)} \times \sum_{n=0}^{N} C_n^N L_n \left[\frac{2r^2}{w_N^2(z)}\right] e^{\left(-2in\Phi_N(z)\right)}$$

for $(1 \leq N \leq 10)$;

wherein $L_n$ is the n-th Laguerre polynomial, $C_n^N$ is related to a binomial coefficient $\binom{m}{n}$ and is given by

$$C_n^N = (-1)^n \sum_{m=n}^{N} \frac{\binom{m}{n}}{2^m}$$, and a wavenumber, the beam spot size at an arbitrary point along the propagation axis of the FGB, the radius of the curvature, and the phase shift are given by k, $w_N(z)$, $R_N(z)$ and $\Phi_N(z)$, respectively, with:

$$k = \frac{2\pi}{\lambda}, \quad w_N(z) = w_N(0)\sqrt{1 + \left(\frac{\lambda z}{\pi w_N^2(0)}\right)^2}, \quad R_N(z) = z\left(1 + \left(\frac{\pi w_N^2(0)}{\lambda z}\right)^2\right),$$

and

$$\Phi_N(z) = arctan\left[\frac{\lambda z}{\pi w_N^2(0)}\right];$$

and

wherein $w_N(0)$ is a spot size at the coordinate z=0 along the principal direction of the beam, wherein the coordinate z=0 is related to the beam waist of the FGB, $w_0$, through $w_N(0) = \frac{w_0}{\sqrt{N}}$ .

Accordingly, these embodiments provide a highly uniform intensity profile of the output beam along a direction being perpendicular to the direction of the output beam. Specifically, the intensity profile is, at least substantially, defined and may thus be safely predicted by a flattened-Gaussian function.

The incident light beam may particularly be a beam of coherent light with a Gaussian distribution, or a beam of semi-coherent light with a constructed Gaussian distribution (quasi-Gaussian, or a beam of optically altered non-coherent light (e.g. the output beam of cascaded highly bright LEDs equipped with a Gaussian soft-aperture (i.e. bull eye filter) with constructed quasi-Gaussian distribution.

In some embodiments, the second combined optical unit comprises: (i) a fourth optical element being or comprising the second lens; (ii) a fifth optical element having an even-aspheric structure for its front surface facing the fourth optical element; and (iii)a sixth optical element having an extended-conic-aspheric back surface facing away from the fifth optical element.

In some embodiments, the second lens is a conic-aspheric-Fresnel element. Specifically, in some of these embodiments, the second lens has at least one of the following properties:

- its stepped front surface facing the first lens has a radius of curvature between 5 mm and 260 mm;
- a conic constant k of the stepped front surface is between 0.001 and 1.5;
- for the zag $z(r)$ of the stepped front surface, the absolute value of its first-order coefficient $\alpha_1$ is between 0 and 0.1, the absolute value of its second-order coefficient $\alpha_2$ is between 0 and 0.1, and/or the absolute value of each of its higher-order coefficients $\alpha_i$ for $i \in \{3,4,5,6,7,8\}$ is between 0 and 0.1.

Also these above parameters define preferred values and ranges of values that allow for a particularly efficient and compact design of the optical device for controlling a light beam.

In some embodiments, the fifth optical element is a rotational-symmetric or cylindrical-symmetric optical element, wherein its front surface has an even-aspheric structure and its back surface located opposite to the front surface has an extended aspheric structure. While in the case of a rotational-symmetric (fifth) optical element, a highly focussed light beam having a rotational-symmetric geometry (cross-section) may be formed, the case of a cylindrical-symmetric optical element is suitable to form a substantially two-dimensional light sheet.

Specifically, in some embodiments, the fifth optical element has at least one of the following properties:

- its front surface has a radius of curvature between 1.25 mm and 1000 mm;
- its back surface has a radius of curvature between -1000 mm and 1000 mm;
- it comprises, and may specifically consist of, a medium, such as Lanthanum of low-index material (S-LAL8), having a refractive index n with $1.45 \leq n \leq 2.2$ and a thickness d with $1 \text{ mm} \leq d \leq 500 \text{ mm}$;
- a conic constant k of its extended-aspheric structure is between 0.01 and 1;
- for the zag $z(r)$ of the even aspheric structure of the front surface the absolute value of its second-order coefficient $\alpha_2$ is between 0 and 0.1, the absolute value of its fourth-order coefficient $\alpha_4$ is between 0 and 0.1, and/or the absolute value of each of its even-order coefficients $\alpha_{2i}$ for i E $\{3,4,5,6,7,8\}$ is between 0 and 0.1.

Also these above parameters define preferred values and ranges of values that allow for a particularly efficient and compact design of the optical device for controlling a light beam.

In some embodiments, the sixth optical element has at least one of the following properties:

- its back surface has a radius of curvature between -10000 mm and 10000 mm;
- it comprises a medium having a refractive index n with $1.2 \leq n \leq 3$ and a thickness d with $1 \text{ mm} \leq d \leq 1000 \text{ mm}$;
- a conic constant k of its extended-aspheric structure is between 0.01 and 1;
- for the zag $z(r)$ of the even aspheric structure of the front surface the absolute value of its second-order coefficient $\alpha_2$ is between 0 and 0.1, the absolute value of its fourth-order coefficient $\alpha_4$ is between 0 and 0.1, and/or the absolute value of each of its even-order coefficients $\alpha_{2i}$ for $i \in \{3,4,5,6,7,8\}$ is between 0 and 0.1.

Also these above parameters define preferred values and ranges of values that allow for a particularly efficient and compact design of the optical device for controlling a light beam.

In some embodiments, the first combined optical unit and the second combined optical unit are separated from each other by a gap between the stepped optical surface of the first lens and the stepped optical surface of the second lens, which face each other, so that the first combined optical unit and the second combined optical unit jointly define an optical bridge, such as a Hyperbolic-Meso-Aspheric-Fresnel Bridge, HMAFB. This enables a particularly broad range of potential current and future applications for which the present HMAFB may be used.

With the optical device described herein, in particular by cascading a few such optical devices, when the incident light is in the UV range, large surfaces can be disinfected rapidly with 99.9% accuracy. It is known that ultra-violet germicidal irradiation (UVGI) is a promising method but the disinfection efficacy is highly dependent on the dose (Energy/Area) and the uniformity of the light distribution along and across the area of illumination. As UV sources generally do not provide a suitable and uniform intensity distribution, exposure times as well as the shape of irradiance distribution has to be adjusted, which can be achieved with the optical device described herein. It is reported that by exposing an area with energy density doses of approximately 1 J/cm2, a 99.9% inactivation of MERS-CoV, and SARS-CoV can rapidly be achieved.

Furthermore, the optical device may be used for high-resolution 3D-imaging in light-sheet fluorescence microscopy.

By way of example, the invention is further explained with respect to some selected embodiments shown in the drawings. However, these embodiments shall not be considered limiting for the invention.

Fig. 1 schematically shows a preferred embodiment of the optical device generating a sheet of light.

Fig. 2 schematically shows the path of light rays in the optical device of Fig. 1 from different perspectives.

Fig. 3 schematically shows a preferred embodiment of the optical device generating a focused spot.

Fig. 4 schematically shows a preferred embodiment of the first or second lens.

Fig. 5a schematically shows a preferred surface profile, which is to be stepwise formed by the active sections.

Fig. 6a schematically shows another preferred embodiment of the optical system for providing a thin sheet of light, in the x-z-plane, illustrating the path of light rays fanned in the x-direction.

Fig. 6b schematically shows the same embodiment as Fig. 6a in the y-z-plane, illustrating the path of light rays fanned in the x-direction.

Fig. 6c schematically shows the same embodiment as Fig. 6a in the x-y-plane, illustrating the path of light rays fanned in the x-direction.

Fig. 6d schematically shows the same embodiment as Fig. 6a in the y-z-plane, illustrating the path of light rays fanned in the y-direction.

Fig. 6e schematically shows the same embodiment as Fig. 6a in the x-z-plane, illustrating the path of light rays fanned in the y-direction.

Fig. 6f schematically shows the same embodiment as Fig. 6a in the x-y-plane, illustrating the path of light rays fanned in the y-direction.

Fig. 7a schematically shows another preferred embodiment of the optical system for providing a spot of light, in the x-z-plane, illustrating the path of light rays fanned in the x-direction.

Fig. 7b schematically shows the same embodiment as Fig. 7a in the y-z-plane, illustrating the path of light rays fanned in the x-direction.

Fig. 7c schematically shows the same embodiment as Fig. 7a in the x-y-plane, illustrating the path of light rays fanned in the x-direction.

Fig. 7d schematically shows the same embodiment as Fig. 7a in the y-z-plane, illustrating the path of light rays fanned in the y-direction.

Fig. 7e schematically shows the same embodiment as Fig. 7a in the x-z-plane, illustrating the path of light rays fanned in the y-direction.

Fig. 7f schematically shows the same embodiment as Fig. 7a in the x-y-plane, illustrating the path of light rays fanned in the y-direction.

Fig. 8a schematically shows a preferred embodiment of the first lens for an optical system for focusing a light beam on a point, in a diagonal view.

Fig. 8b schematically shows the same embodiment of the first lens as Fig. 8a in the x-y-plane.

Fig. 8c schematically shows the same embodiment of the first lens as Fig. 8a in the y-z-plane.

Fig. 9a schematically shows a preferred embodiment of the second lens for an optical system for focusing a light beam on a point, in a diagonal view.

Fig. 9b schematically shows the same embodiment of the second lens as Fig. 9a in the x-y-plane.

Fig. 9c schematically shows the same embodiment of the second lens as Fig. 9a in the y-z-plane.

Fig. 10a schematically shows a preferred embodiment of the first lens for an optical system for focusing a light beam on a line, in a diagonal view.

Fig. 10b schematically shows the same embodiment of the first lens as Fig. 10a in the x-y-plane.

Fig. 10c schematically shows the same embodiment of the first lens as Fig. 10a in the x-z-plane.

Fig. 10d schematically shows the same embodiment of the first lens as Fig. 10a in the y-z-plane.

Fig. 11a schematically shows a preferred embodiment of the second lens for an optical system for focusing a light beam on a line, in a diagonal view.

Fig. 11b schematically shows the same embodiment of the second lens as Fig. 11a in the x-y-plane.

Fig. 11c schematically shows the same embodiment of the second lens as Fig. 11a in the x-z-plane.

Fig. 11d schematically shows the same embodiment of the second lens as Fig. 11a in the y-z-plane.

Fig. 12 shows a print from a software for building first or second lenses of different parameters on the left side and a lens with a different number of steps in the stepped optical surface on the right side.

Fig. 13 shows an exemplary embodiment of a compact Hyperbolic-Meso-Aspheric-Fresnel Bridge, HMAFB, for generating a highly focused beam and the beam propagation through it.

Fig. 14A shows an exemplary technical drawing for illustration of a cross-section view of the HMAFB of Fig. 13 in a plane parallel to the optical axis of the HAMFB.

Fig. 14B shows an exemplary technical drawing for illustration of a perspective view of the HMAFB of Fig. 13.

Fig. 15 shows an exemplary technical drawing for illustration of a cross-section view of a HMAFB for generating a sheet of light in a plane parallel to the optical axis of the HAMFB.

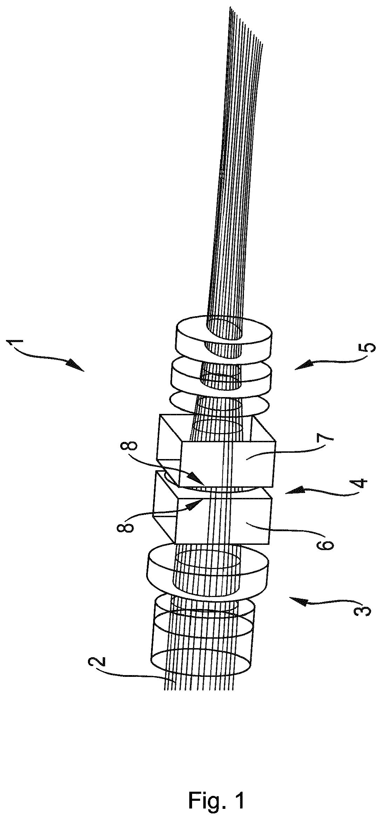

Fig. 1 shows a preferred embodiment of the optical device 1 for controlling a light beam 2. The optical device 1 focuses the light beam 2 substantially on a line and produces a thin sheet of light. The optical device 1 comprises a beam shaping unit 3 for increasing the uniformity of the spatial intensity profile of the light beam 2. The optical device 1 further comprises in the path of the light beam 2 a lens system 4 and a focusing unit 5. The lens system 4 is arranged in the optical path of the light beam 2 between the beam shaping unit 3 and the focusing unit 5.

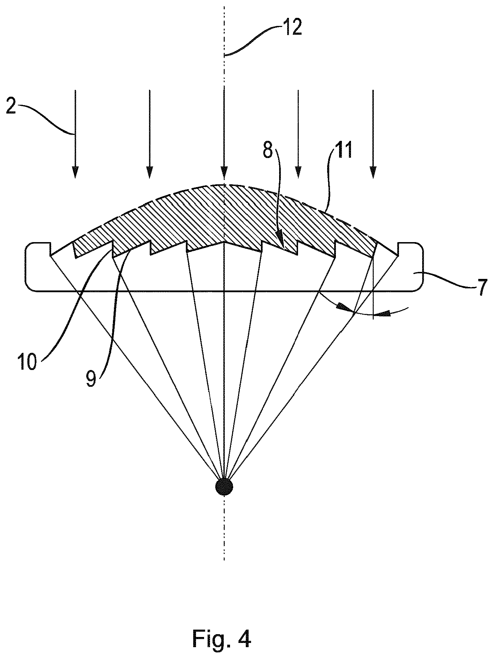

The lens system 4 comprises a first lens 6 and a second lens 7. Each of the first lens 6 and the second lens 7 comprises a stepped optical surface 8 formed by active sections 9 and reset sections 10 alternating with each other (see Fig. 4 showing the active section 9 and reset sections 10 in more detail). The active sections 9 stepwise form a surface profile 11, which is aspheric. The stepped optical surface 8 of the first lens 6 faces the stepped optical surface 8 of the second lens 7. Since the light beam 2 is to be focused on a line, the first lens 6 and the second lens 7 are each a general cylindrical lens, i.e. an aspheric cylindrical lens. Therefore, the active section 9 and reset sections 10 form axial facets of the respective first and second lens 6, 7.

The optical device 1 provides a stretched thin area of uniformity of the light beam 2 along as well as perpendicular to the propagation axis of the light beam 2, e.g. with an average thickness of 2 $\mu$m at the focus, thereby providing a thin sheet of light acting like a magic carpet. This ultra-thin sheet of light has an extended area of uniformity in the intensity distribution along all axes, which makes it an excellent candidate for many medical and industrial applications.

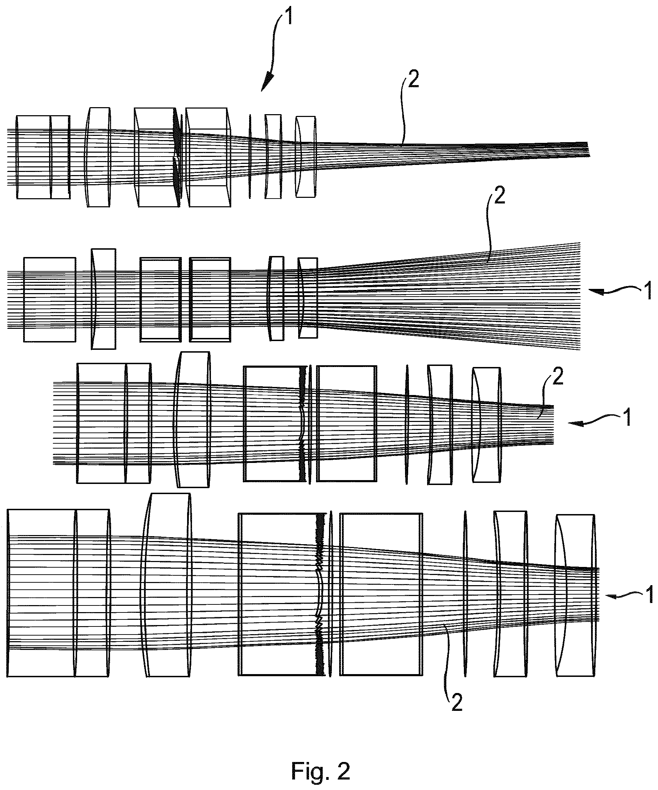

Fig. 2 schematically shows the paths of the light rays in the embodiment of the optical device 1 of Fig. 1 from various perspectives in more detail. In particular, the spreading of the light beam 2 to a line (along the axis of extension of the line) is visible from the image second to the top. The focusing of the light beam 2 to the line (orthogonally to the axis of extension of the line) is visible from the lower two images in Fig. 2.

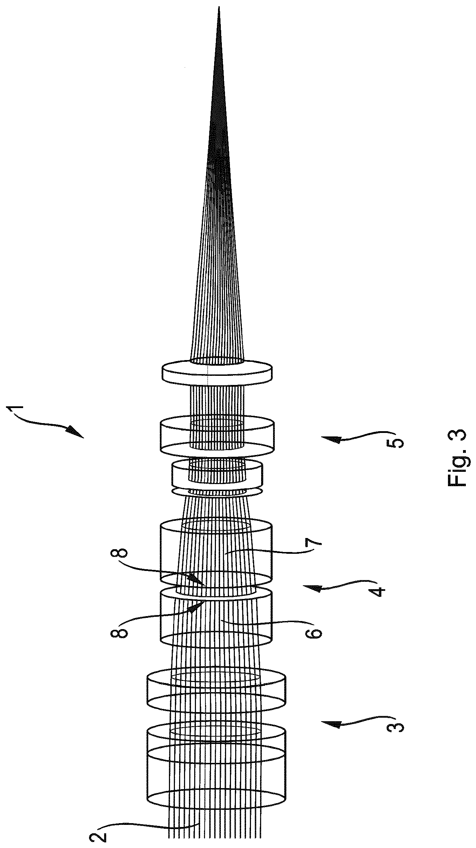

Fig. 3 schematically shows another preferred embodiment of the optical device 1 for controlling a light beam 2. This embodiment differs from the embodiment shown in Fig. 1 in that the optical device 1 focuses the light beam 2 substantially on a point and produces a spot of light.

The optical device 1 comprises the beam shaping unit 3 for increasing the uniformity of the spatial intensity profile of the light beam 2. The optical device 1 further comprises in the path of the light beam 2 the lens system 4 and the focusing unit 5. The lens system 4 is arranged in the optical path of the light beam 2 between the beam shaping unit 3 and the focusing unit 5.

The lens system 4 comprises a first lens 6 and a second lens 7. Each of the first lens 6 and the second lens 7 comprises a stepped optical surface 8 formed by active sections 9 and reset sections 10 alternating with each other (see Fig. 4 showing the active section 9 and reset sections 10 in more detail). The active sections 9 stepwise form the surface profile 11, which is aspheric. The stepped optical surface 8 of the first lens 6 faces the stepped optical surface 8 of the second lens 7. Since the light beam 2 is to be focused on a point, the first lens 6 and the second lens 7 are each rotationally symmetric around their respective optical axis. Thus, the active sections 9 and the reset sections 10 form radial facets of the respective stepped optical surface 8.

The optical device 1 produces a highly focused beam with a long working distance, a low numerical aperture and an extended depth of the field. For example, by using a 488 nm laser beam of 1000 $\mu$m width with a 0.5 mrad divergence angle as an illumination source, one obtains a highly focused beam (i.e. the intensity distribution contains a sharp peak with negligible side-shoulder around the central peak) that has an average width of 1 $\mu$m over 250 $\mu$m distance along the propagation axis when it increases by $\sqrt{2}$. The optical device 1 overcomes many optical barriers existing in conventional systems for surgery, communications, micromachining, and material processing.

Fig. 4 schematically shows a section through a symmetry axis 12 of a preferred embodiment of the first lens 6 or the second lens 7 in more detail. The direction of the light beam 2 is shown as it would occur for the second lens 7 in the embodiment of Fig. 1 and Fig. 3, therefore reference is made to the second lens 7 in the following. However, it may also be used as the first lens 6. The second lens 7 comprises a stepped optical surface 8 formed by active sections 9 and reset sections 10 alternating with each other. The active sections stepwise form the surface profile 11. The form of the surface profile 11 stepwise formed is shown as a dashed line. The surface profile 11 is aspheric. In particular, the surface profile stepwise formed by the active sections 9 and the reset sections 10 of the second lens 7 is substantially oblate elliptical in a cross-section through the symmetry axis 12 of the second lens 7 (i.e. the section shown in Fig. 4). The symmetry axis 12 is the optical axis of the second lens 7.

The second lens 7 may be either rotationally symmetrical around the symmetry axis 12, e.g. for use in the optical device 1 of Fig. 3 for focusing the light beam 2 on a point, or the second lens 7 may be a general cylindrical lens, e.g. for use in the optical device 1 of Fig. 1 for focusing the light beam 2 on a line.

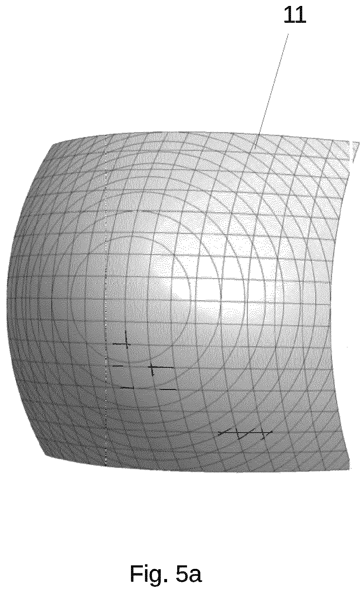

Fig. 5a schematically shows a preferred surface profile 11, which is to be stepwise formed by the active sections 9 of the first and/or second lens 6, 7. The surface profile 11 is aspheric.

Fig. 5a shows the surface profile 11 for a rotationally symmetric lens.

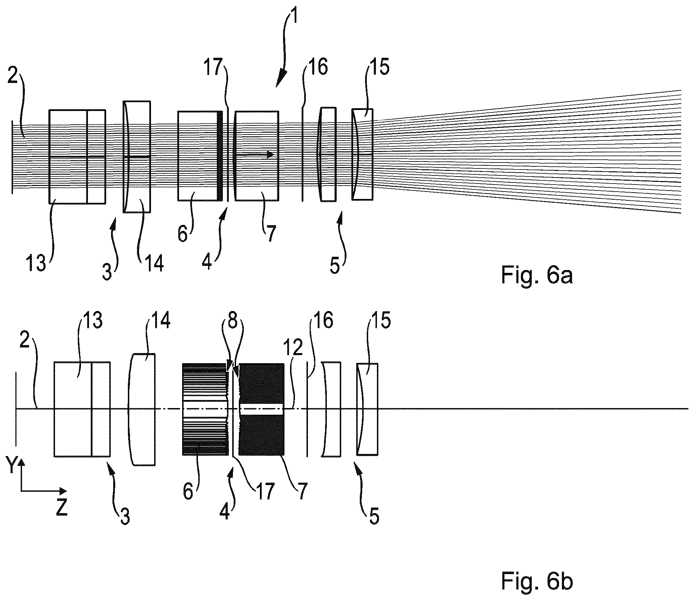

Figs. 6a to 6f schematically show another preferred embodiment of the optical system 1. In this embodiment, the optical system 1 is for providing a thin sheet of light. This embodiment works similar to the one shown in Fig. 1. Therefore, in the following, only the differences between these embodiments are described. Unless stated otherwise, the features and advantages described in the context of the embodiment of Fig. 1 are also applicable in the context of the embodiment of Figs. 6a to 6f and for this reason elements that are the same or provide the same function are indicated by the same reference numerals.

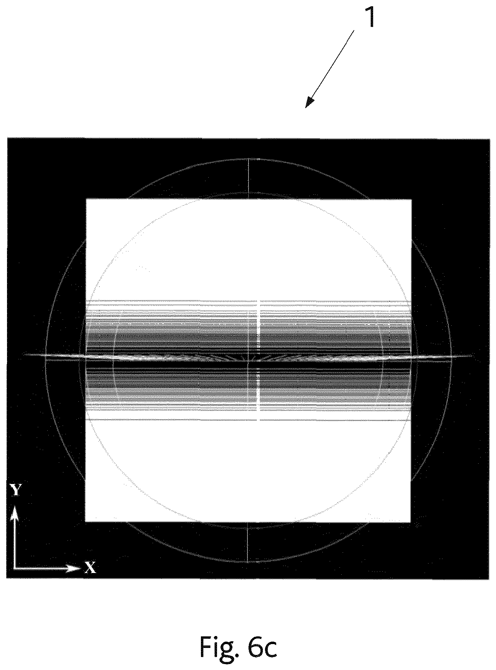

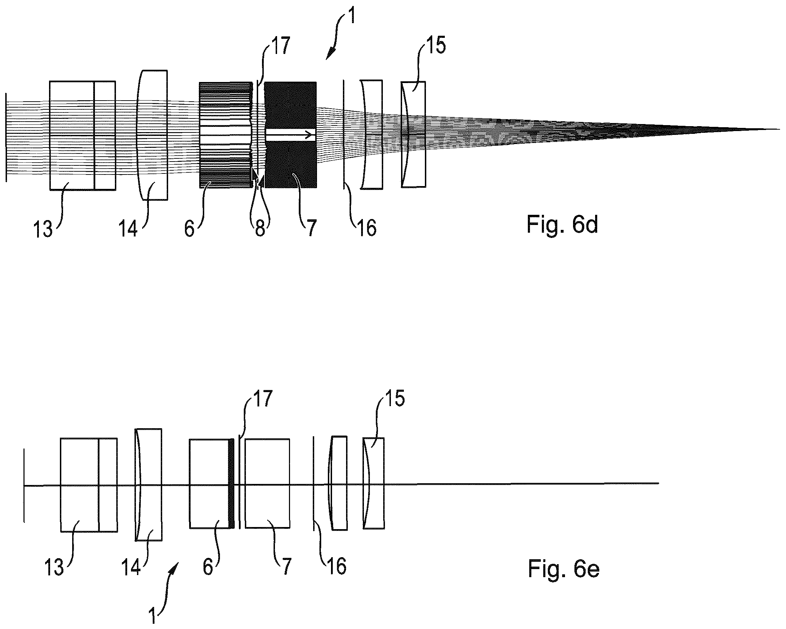

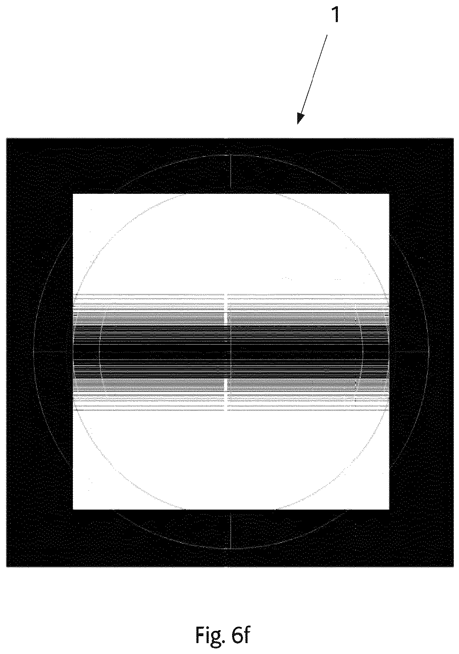

In all figures, the z-axis is parallel to the optical axis of the optical device 1. Figs. 6a to 6c illustrate the path of light rays which are fanned in the direction of the x-axis and Figs. 6d to 6f illustrate the path of light rays which are fanned in the direction of the y-axis. Fig. 6a shows the x-z-plane, Fig. 6b the y-z-plane, Fig. 6c the x-y-plane, Fig. 6d the y-z-plane, Fig. 6e the x-z-plane and Fig. 6f the x-y-plane.

In this embodiment, the beam shaping unit 3 comprises a negative lens 13 and a positive lens 14, which are both achromatic and aspheric. Furthermore, the focusing unit comprises a positive lens 15 (it focuses in the y-direction), which is also achromatic and aspheric. The optical device 1 also comprises an aperture 17 between the first lens 6 and the second lens 7 and another aperture 16 after the lens system 4.

As can be seen in Fig. 6a, the light beam 2 is spread in the direction of the x-axis, which is the direction of the extension of the line that the light beam 2 is focused on. On the other hand, as can be seen in Fig. 6d, the light beam 2 is focused in the direction of the y-axis, which is the direction orthogonal to the extension of the line. Thus, a very thin sheet of light with high uniformity is provided by the optical device 1.

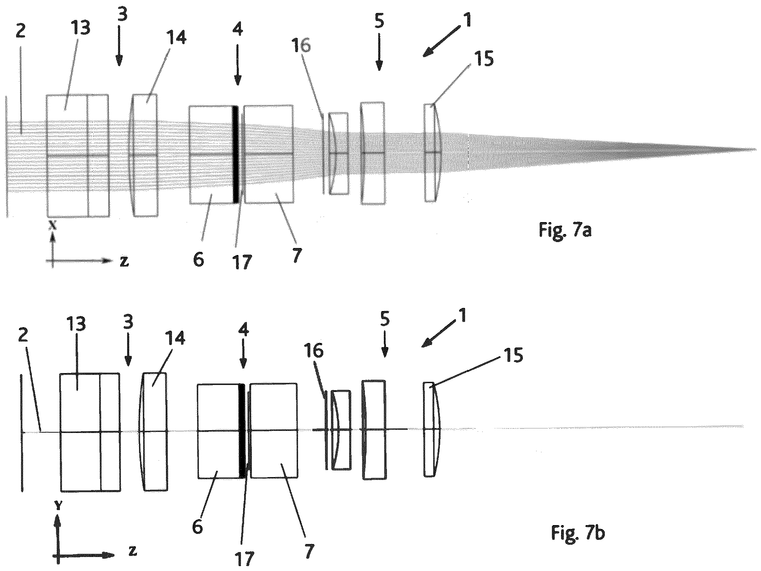

Figs. 7a to 7f schematically show another preferred embodiment of the optical system 1. In this embodiment, the optical system 1 is for providing a spot of light. This embodiment works similar to the one shown in Fig. 3. Therefore, in the following, only the differences between these embodiments are described. Unless stated otherwise, the features and advantages described in the context of the embodiment of Fig. 3 are also applicable in the context of the embodiment of Figs. 7a to 7f and for this reason elements that are the same or provide the same function are indicated by the same reference numerals.

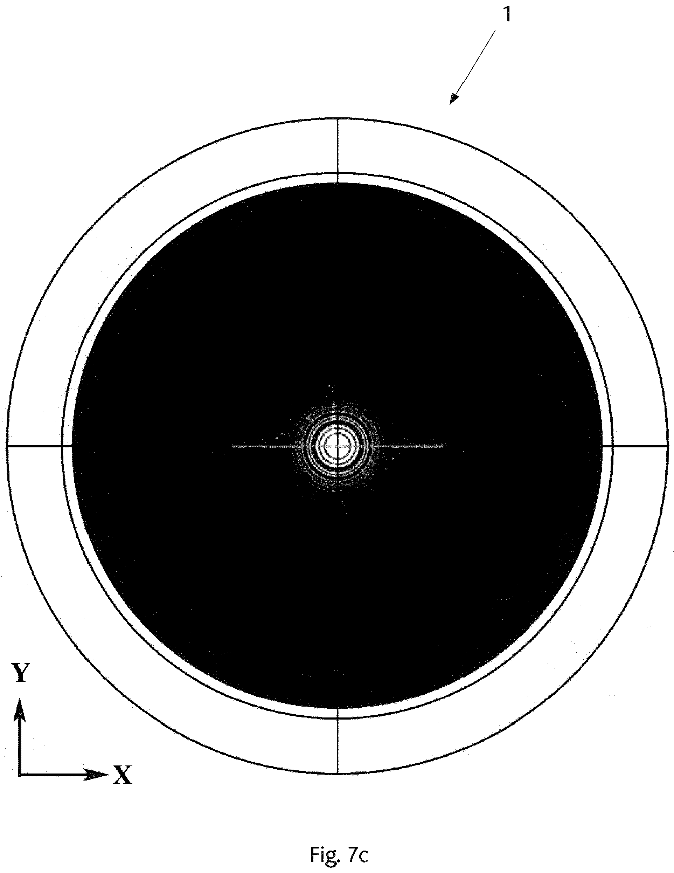

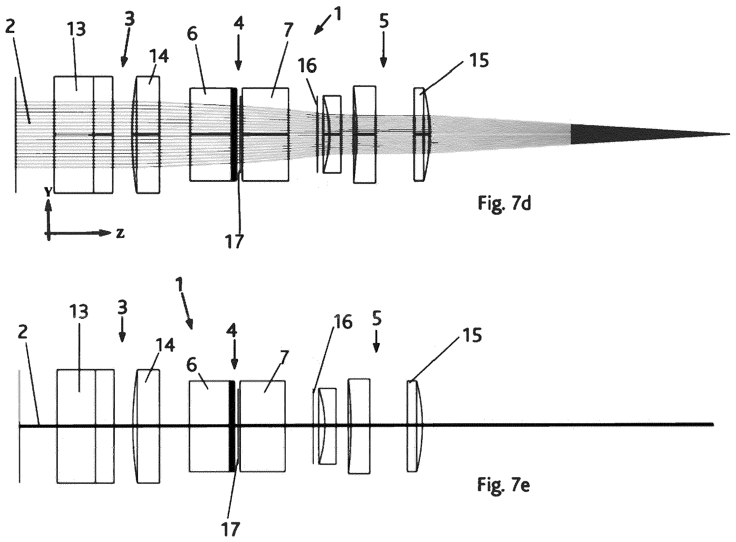

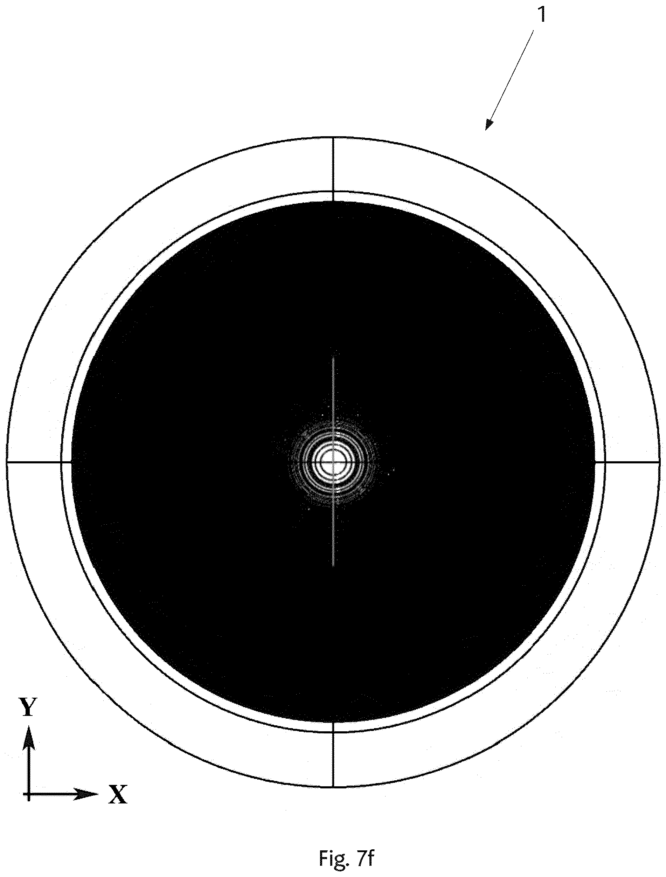

In all figures, the z-axis is parallel to the optical axis of the optical device 1. Figs. 7a to 7c illustrate the path of light rays which are fanned in the direction of the x-axis and Figs. 7d to 7f illustrate the path of light rays which are fanned in the direction of the y-axis. Fig. 7a shows the x-z-plane, Fig. 7b the y-z-plane, Fig. 7c the x-y-plane, Fig. 7d the y-z-plane, Fig. 7e the x-z-plane and Fig. 7f the x-y-plane.

In this embodiment, the beam shaping unit 3 comprises a negative lens 13 and a positive lens 14, which are both achromatic and aspheric. Furthermore, the focusing unit comprises a positive lens 15 (it focuses in both the x- and the y-direction), which is also achromatic and aspheric. The optical device 1 also comprises an aperture 17 between the first lens 6 and the second lens 7 and another aperture 16 after the lens system 4.

As can be seen in Figs. 7a and 7d, the light beam 2 is focused in both the x- and the y-direction. Therefore, a highly focused spot of light is provided.

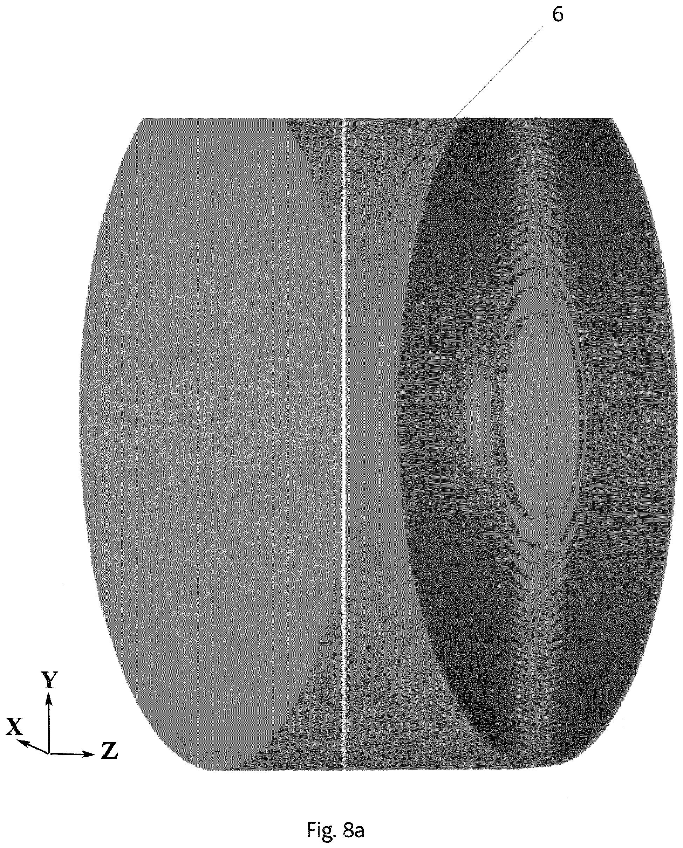

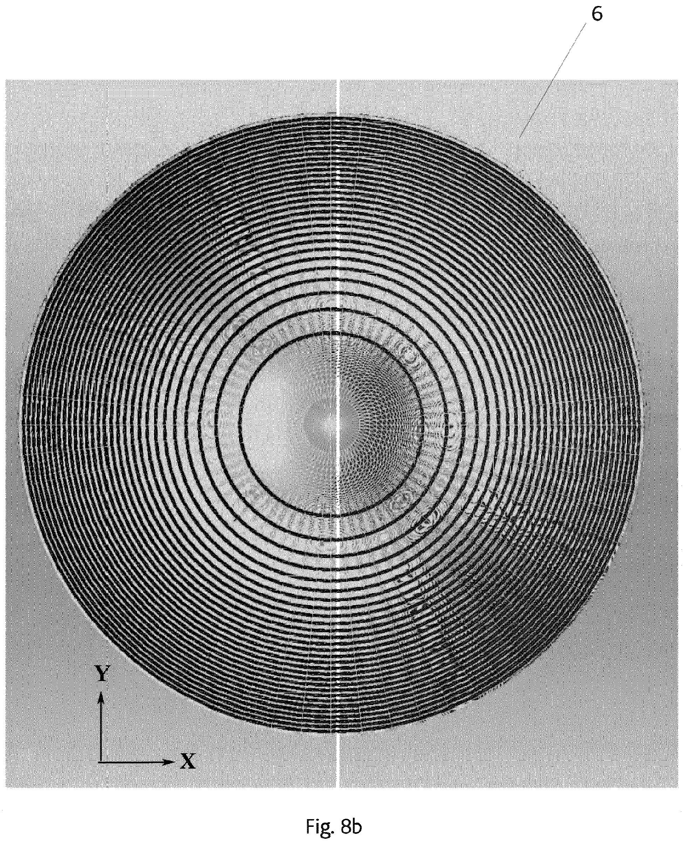

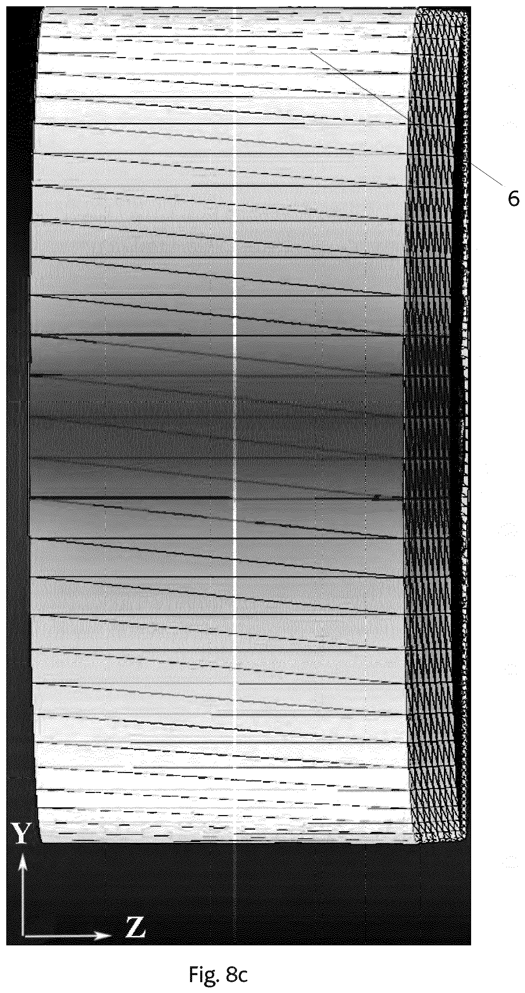

Figs. 8a to 8c show a preferred embodiment of the first lens 6 for the optical device 1 for providing a spot of light, e.g. for the embodiment of the optical device 1 of Fig. 3 or Fig. 7a. Therefore, the first lens 6 in this embodiment is rotationally symmetrical around its optical axis.

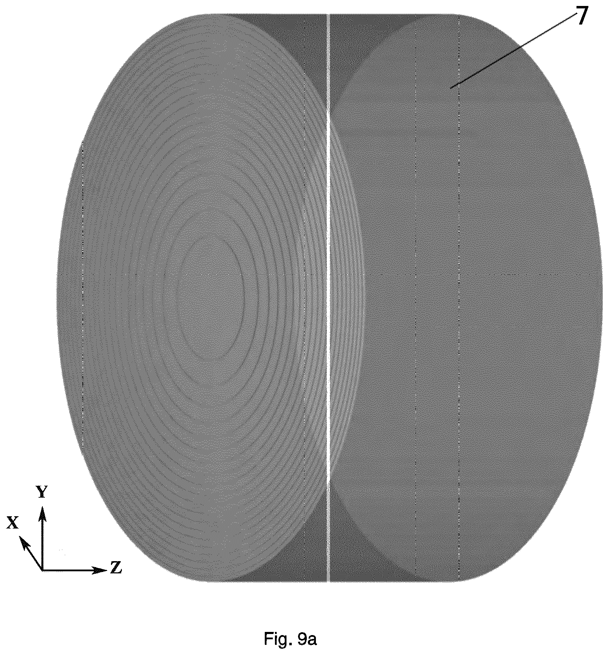

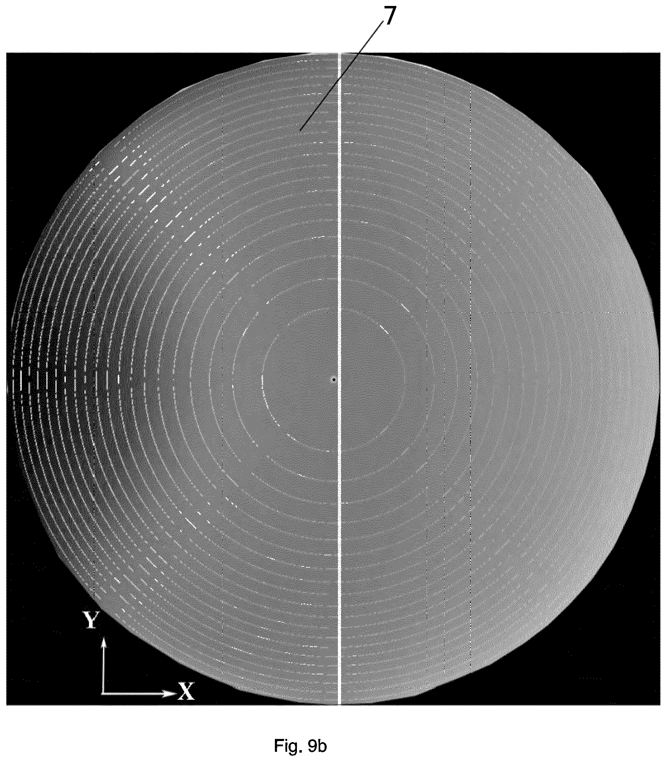

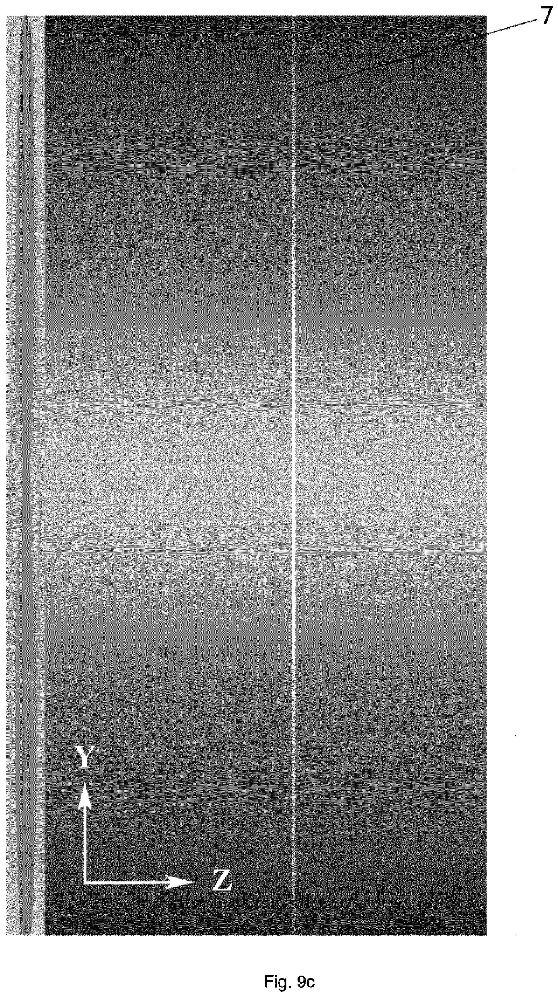

Figs. 9a to 9c show a preferred embodiment of the second lens 7 for the optical device 1 for providing a spot of light, e.g. for the embodiment of the optical device 1 of Fig. 3 or Fig. 7a.

Therefore, the second lens 7 in this embodiment is rotationally symmetrical around its optical axis.

The first lens 6 of Fig. 8a and the second lens 7 of Fig. 9a are preferably used in the same optical device 1.

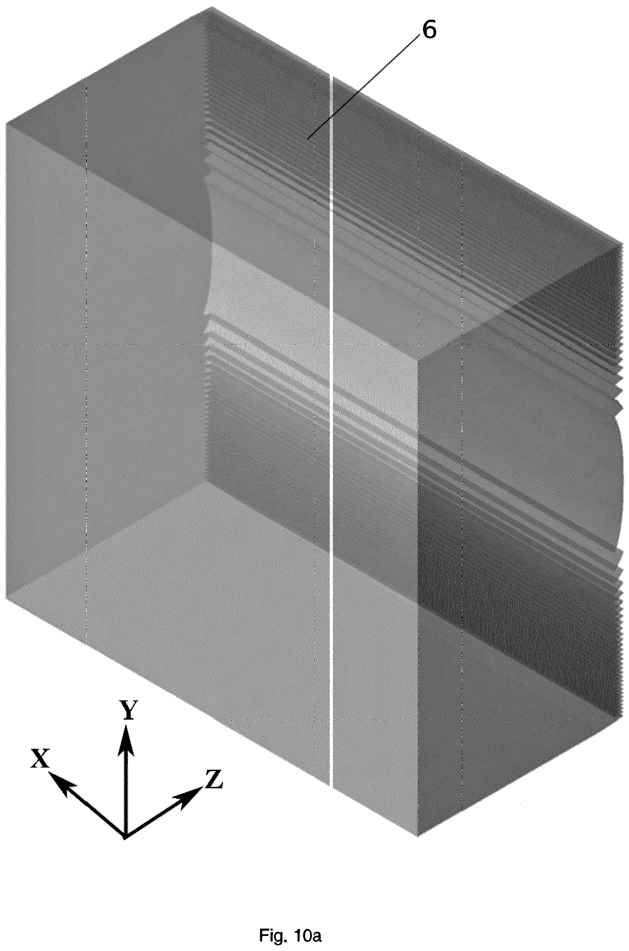

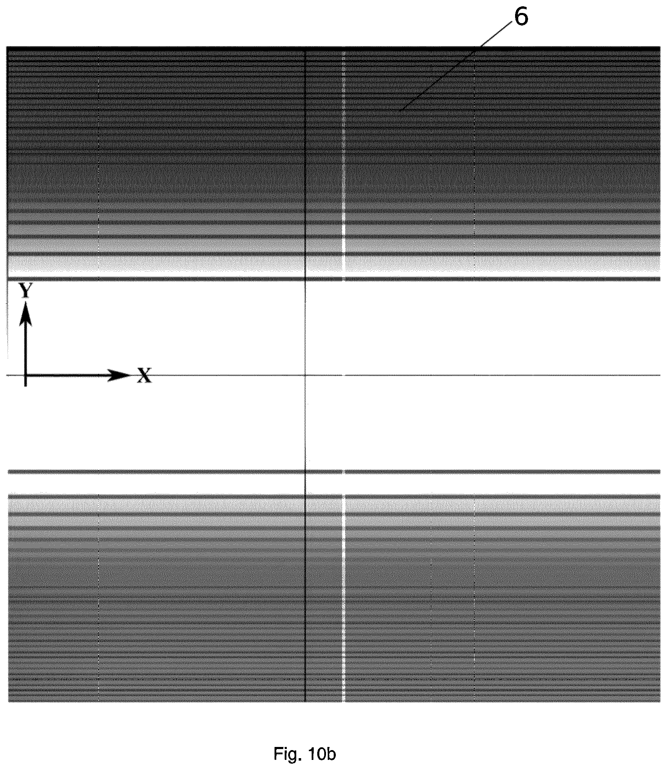

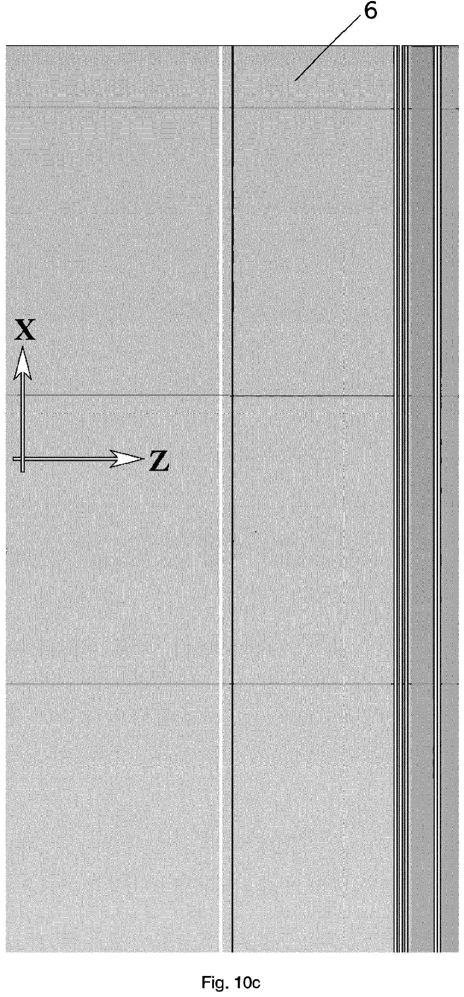

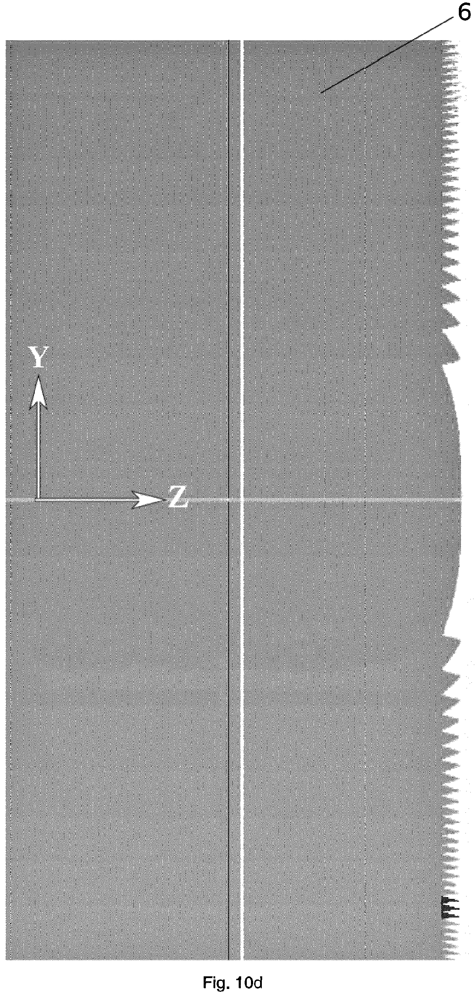

Figs. 10a to 10d show a preferred embodiment of the first lens 6 for the optical device 1 for providing a sheet of light, e.g. for the embodiment of the optical device 1 of Fig. 1 or Fig. 6a. Therefore, the first lens 6 in this embodiment is a general cylindrical lens.

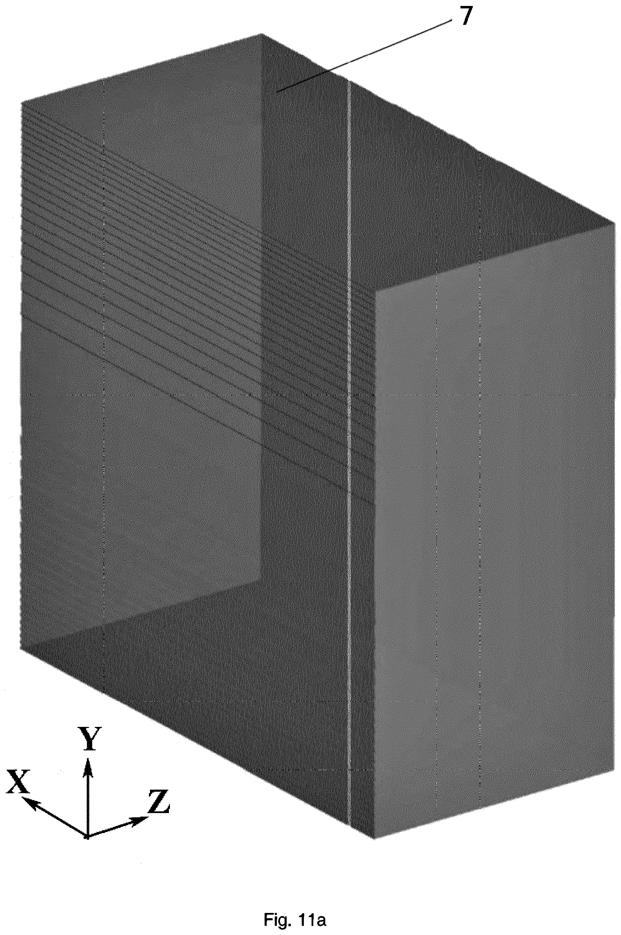

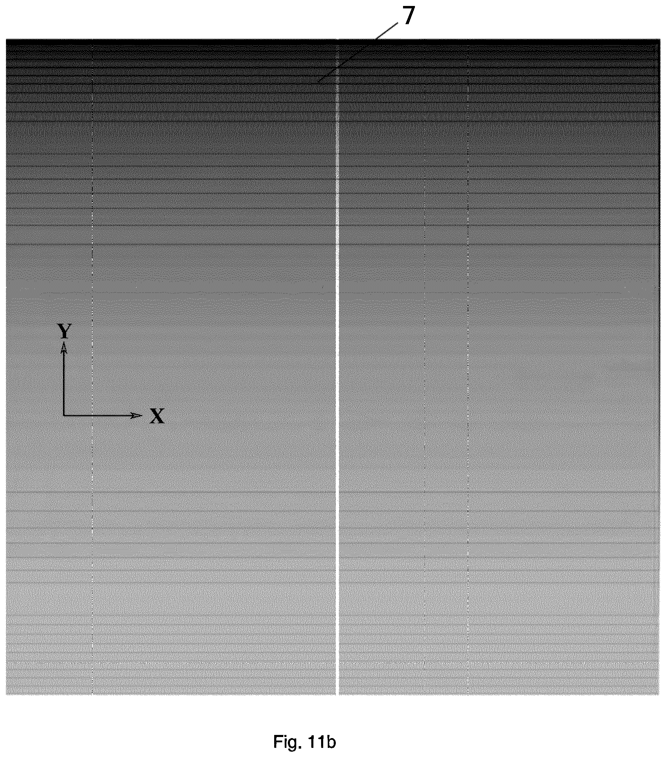

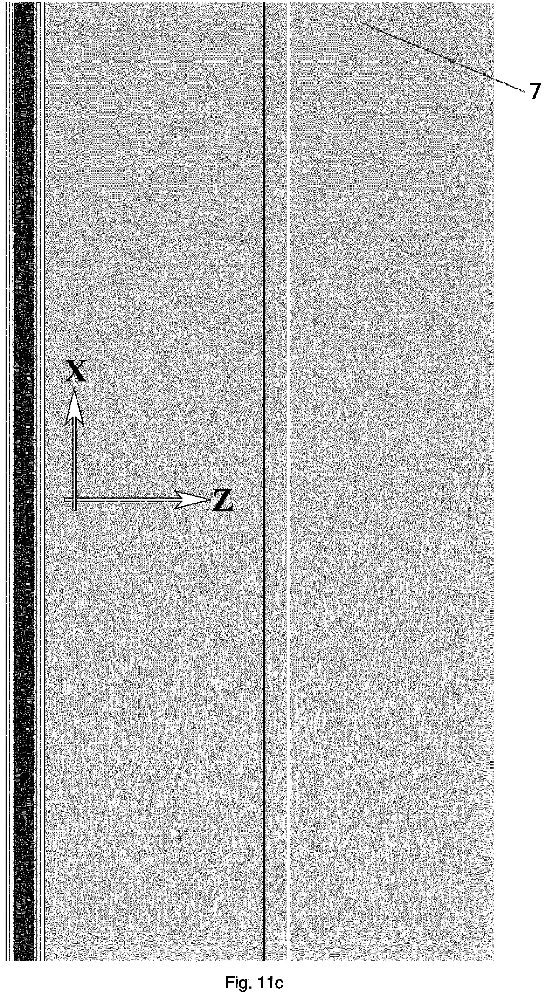

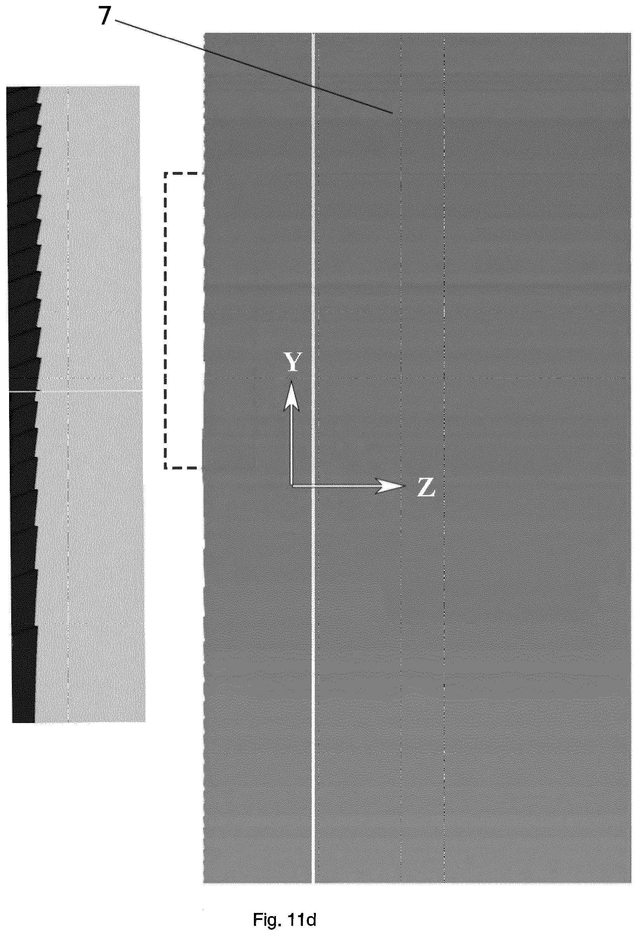

Figs. 11a to 11d show a preferred embodiment of the second lens 7 for the optical device 1 for providing a sheet of light, e.g. for the embodiment of the optical device 1 of Fig. 1 or Fig. 6a. Therefore, the second lens 7 in this embodiment is a general cylindrical lens. Further, Fig. 11d shows an enlarged section of the surface profile of the stepped optical surface 8.

The first lens 6 of Fig. 10a and the second lens 7 of Fig. 11a are preferably used in the same optical device 1.

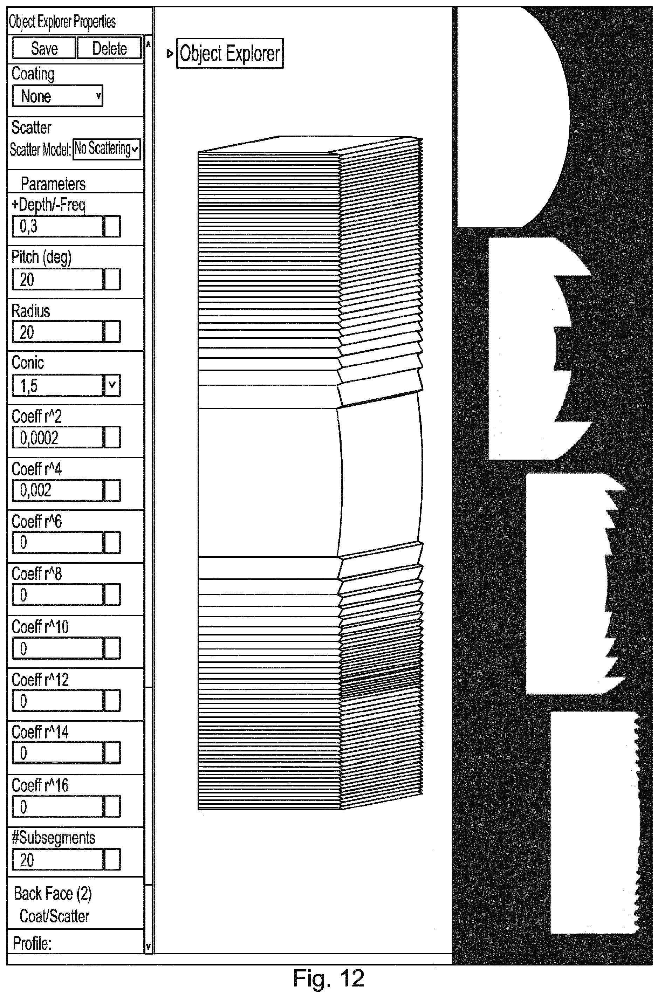

Fig. 12 shows a print from a software for building first or second lenses 6, 7 of different parameters on the left side and a lens with a different number of steps in the stepped optical surface 8 on the right side.

The surface profile 11 stepwise formed by the active sections 9 of the respective lens is defined by the sag z(r) in a cross-section through a symmetry axis of the surface profile 11, with r being the displacement from the symmetry axis of the surface profile 11, wherein

$$z = \frac{cr^2}{1+\sqrt{1-(1+k)c^2r^2}} + \alpha_1 r^2 + \alpha_2 r^4 + \alpha_3 r^6 + \alpha_4 r^8 + \alpha_5 r^{10} + \alpha_6 r^{12} + \alpha_7 r^{14} + \alpha_8 r^{16}$$

with

the radius of curvature R=1/c,
the conic constant k,
and the quadratic terms $\alpha_i$ for (i=1,2,3,4,5,6,7,8), labelled Coeff r^i in Fig. 12.

In particular, the following parameters define the lens:

- The Radial Height: It is the maximum radial aperture of the lens if radially symmetric, or the y-half height if cylindrically symmetric.
- X Half-Width: This is the half-width of the lens if cylindrically symmetric. If this parameter is zero, then a rotationally symmetric lens is generated
- Thickness: The thickness of the lens should in particular be chosen in a way that the absolute value of the thickness exceeds the deepest groove depth.
- Depth/-Frequency: If this parameter is positive, then it corresponds to the depth of each groove in lens units. If negative, then it corresponds to the frequency of the grooves. For example, a value of -2.0 will yield 2 grooves per radial lens unit. If the groove depth is defined, the radial positions of the grooves will generally vary; if the groove frequency is defined; the groove depth will vary.
- Pitch (degrees): The pitch is the angle the reset sections (i.e. "inactive" faces) (those faces nominally parallel to the local z-axis) make concerning the z-axis. The pitch is generally radially outward, no matter if the pitch angle is positive or negative.
- Radius: The base radius of curvature. This is one over the value c in the sag expression.
- The conic constant.

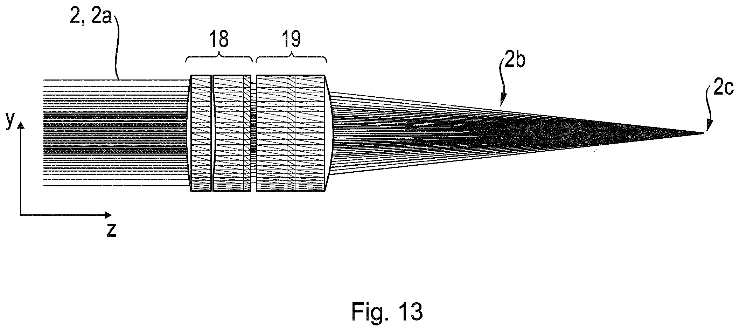

Fig. 13 shows an exemplary embodiment of a compact Hyperbolic-Meso-Aspheric-Fresnel Bridge 27, HMAFB, for generating a highly focused beam and the beam propagation through it. The HMAFB 27 comprises a first combined optical unit 18 and a separate second combined optical unit 19, which are arranged relative to one another that their respective optical axes coincide and a light beam 2, comprising in particular a substantially parallel incident beam portion 2a, e.g. a laser beam, traveling along a direction z of the common optical axis can pass through the HMAFB while being modified, particularly shaped, thereby to produce a converging (focused) output beam 2b with a focus point or focus line 2c.

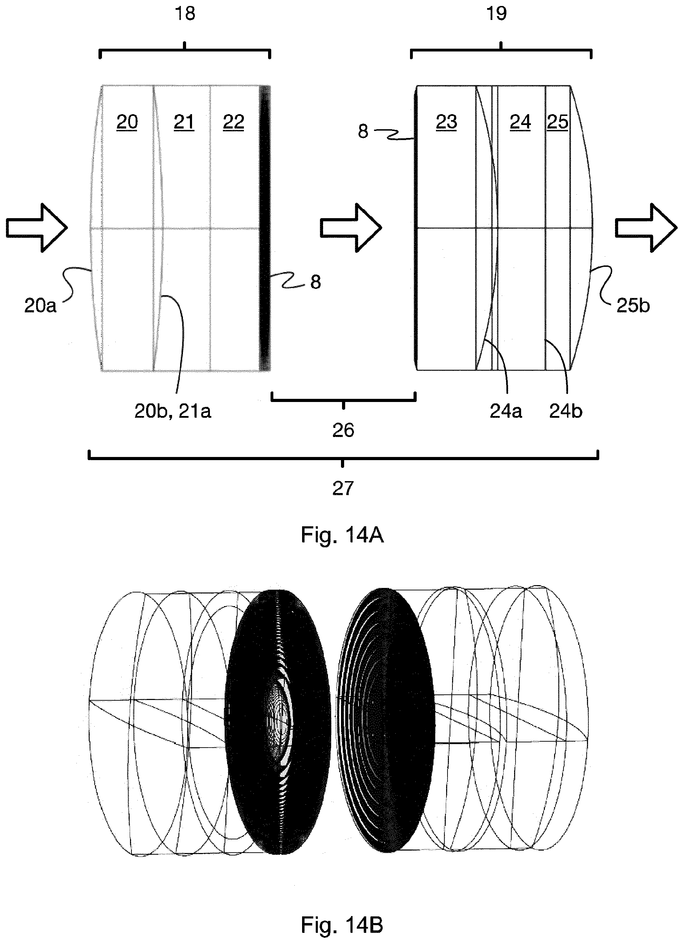

Fig. 14A shows an exemplary technical drawing for illustration of a cross-section view of the HMAFB of Fig. 13 in a plane parallel to the optical axis of the HMAFB while Fig. 14B shows an exemplary technical drawing for illustration of a perspective view of this HMAFB. The beam 2, namely its incident beam portion 2a, enters the HMAFB at the first combined optical unit 18, namely at a front surface 20a thereof.

The first combined optical unit 18 comprises three different optical elements 20, 21 and 22, which are combined (joined) to form together the first combined optical unit 18 as an assembly. Specifically, the first optical element 20, the second optical element 21 and the third optical element 22 may be fixedly joined at their respective facing surfaces by means of a transparent cement, which joins the surfaces without leaving a non-filled gap in-between, so that the light beam can travel from one of the optical elements to the next (along the direction indicated by the arrows)along an optical propagation axis of the first combined optical unit 18, particularly without having to cross a non-filled gap such as an air gap or vacuum gap. Ideally, the refractive index of the cement is selected such as to match, at least approximately, that of at least one of the two optical elements it joins. In this way undesired and difficult-to-control aberrations caused by non-matching refractive indexes at the interface between the neigboring optical elements can be mitigated.

The first optical element 20 may particularly comprise or consist of a medium having a refractive index n with $1.45 \leq n \leq 2$ and may have a thickness d with $1 \text{ mm} \leq d \leq 250 \text{ mm}$.

Moreover, the first optical element 20 has an aspheric-conic, particularly convex-curved towards the incident light beam 2a, front surface 20a for initial alteration of the phase and amplitude of the incident light beam 2a when it enters the first optical element 20 through the front surface 20a. Specifically, the first optical element 20 is a rotational-symmetric or cylindrical-symmetric optical element, and its front surface 20a has an even-aspheric structure while its back surface 20b located opposite to the front surface 20a has an extended aspheric structure, i.e. a spatially extended (even) aspheric structure, which may particularly be concave-curved towards the incident light, as illustrated.

Specifically, the front surface 20a may particularly have a radius of curvature between 2.5 mm and 1500 mm and a conic constant k between 0.01 and 5. For the zag z(r) of the even-aspheric structure of the front surface 20a, the absolute value of its second-order coefficient $\alpha_2$ is between 0 and 0.1, the absolute value of the fourth-order coefficient $\alpha_4$ is between 0 and 0.1, and/or the absolute value of each of its even-order coefficients $\alpha_{2i}$ for $i \in \{3,4,5,6,7,8\}$ is between 0 and 0.1. The back surface 20b may particularly have a radius of curvature between -1000 mm and 1000 mm.

The second optical element 21 has a front surface 21a that faces the first optical element 20, with which it is fixedly joined, and has an extended aspheric structure matching with the back surface 20b of the first optical element 20. Accordingly, in the present example, the front surface 21a is concave-curved towards the incident light coming from the first optical element 20. The front surface 21a may particularly have a radius of curvature, R=1/c, between -1000 mm and 1000 mm. The back surface of the second optical element 21 and the front surface of the third optical element 22, which face each other and are also fixedly joined with one another, may each be planar.

Specifically, the second optical device 21 may comprise or consist of a medium having a refractive index n with $1.45 \leq n \leq 2.2$ and may have a thickness d with $1 \text{ mm} \leq d \leq 500 \text{ mm}$.

The third optical element 22 is a first lens 6 having a stepped optical surface 8 formed by active sections 9 and reset sections 10 alternating with each other, wherein the active sections 9 stepwise form a surface profile 11 which is aspheric, as described in more detail above. The third optical element 23, is fixedly joined with its front surface to the matching back surface of the second optical element 22.

The second combined optical unit 19 comprises three different optical elements, namely a fourth optical element 23, a fifth optical element 24 and a sixth optical element 25, which are combined (joined) to form together the second combined optical unit 19 as an assembly. Specifically, optical elements 23 to 25 may be fixedly joined at their respective facing surfaces by means of a transparent cement, which joins the surfaces without leaving a non-filled gap in-between, so that the light beam can travel from one of the optical elements to the next along an optical propagation axis of the second combined optical unit 19, particularly without having to cross a non-filled gap, such as an air gap or vacuum gap. Ideally, the refractive index of the cement is selected such as to match, at least approximately, that of at least one of the two optical elements it joins. In this way undesired and difficult-to-control aberrations caused by non-matching refractive indexes at the interface between the neigboring optical elements can be mitigated.

The fourth optical element 23 is a second lens 7 in the form of a conic-aspheric-Fresnel element having a stepped optical surface 8 formed by active sections 9 and reset sections 10 alternating with each other, wherein the active sections 9 stepwise form a surface profile 11 which is aspheric, as described in more detail above. The fourth optical element 23, is fixedly joined with its back surface to the matching front surface 24a of the fifth optical element 24. The front surface 24a may particularly be concave-curved towards the incident light coming from the fourth optical element 23.

The first combined optical unit 18 and the second combined optical unit 19 are arranged relative to each other in such a way that their respective stepped optical surfaces 8 face each other while being separated by a gap, e.g. an air gap, 26.

The fifth optical element 24 has an even-aspheric structure for its front surface facing the fourth optical element 23. It may particularly comprise or consist of a medium having a refractive index n with $1.45 \leq n \leq 2.2$ and a thickness d with $1\ mm \leq d \leq 500\ mm$. Its front surface 24a may particularly have a radius of curvature between 1.25 mm and 1000 mm and its back surface 24b may particularly have a radius of curvature between -1000 mm and 1000 mm.

The sixth optical element 25 has a back surface 25b having an extended-conic-aspheric structure with a radius of curvature between -10000 mm and 10000 mm and a conic constant k between 0.01 and 1.

The back surface 25b is at the same time the surface of the bridge 27 where the shaped beam 2, i.e. its output beam portion 2b exits from the second combined optical unit and the bridge 27 as a whole.

Specifically, the sixth optical element 25 may comprises or consist of a medium having a refractive index n with $1.2 \leq n \leq 3$ and may have a thickness d with $1\ mm \leq d \leq 1000\ mm$.

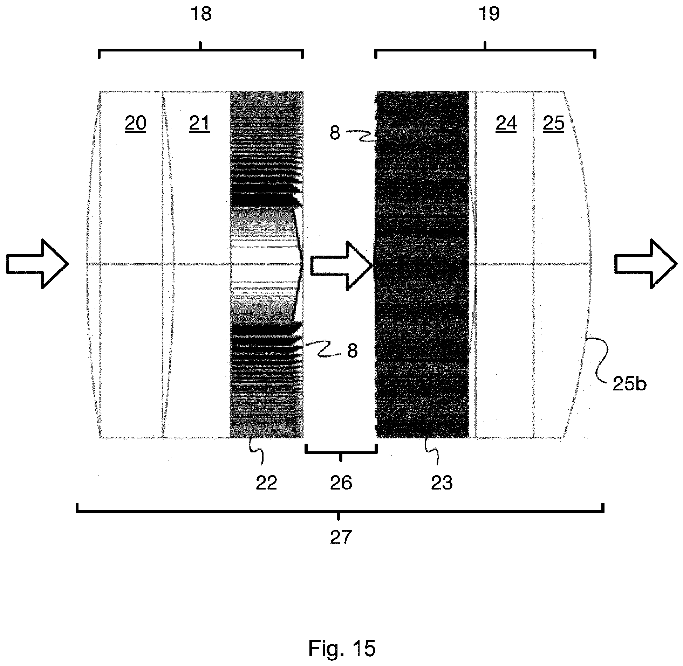

Fig. 15 shows an exemplary technical drawing for illustration of a cross-section view of a HMAFB for generating a sheet of light in a plane parallel to the optical axis of the HAMFB. Rather than having a rotational symmetry, its first to sixth optical elements 20 to 25 each have a cylindrical symmetry such that the HMAFB is configured to form an output beam 2b defining a substantially two-dimensional light sheet with extended uniformity described by a flattened-Gaussian beam, FGB, of low-order, e.g. according to Equation 1 provided above.

| | |
|---|---|
| 1 | optical device |
| 2 | light beam |
| 2a | incident beam portion of light beam 2 |
| 2b | (converging)output beam portion of light beam 2 |
| 2c | focus point or focus line (in case of light sheet)of light beam 2 |
| 3 | beam shaping unit |
| 4 | lens system |
| 5 | focusing unit |
| 6 | first lens |
| 7 | second lens |
| 8 | stepped optical surface |
| 9 | active section(s) |
| 10 | reset section(s) |
| 11 | surface profile |
| 12 | symmetry axis |
| 13 | negative lens of beam shaping unit |
| 14 | positive lens of beam shaping unit |
| 15 | positive lens of focusing unit |
| 16 | aperture |
| 17 | aperture |
| 18 | first combined optical unit |
| 19 | second combined optical unit |
| 20 | first optical element |
| 20a | front surface of the first optical element 20 |
| 20b | back surface of the first optical element 20 |
| 21 | second optical element |
| 21a | front surface of the second optical element |
| 22 | third optical element, coinciding with first lens 6 |
| 23 | fourth optical element, coinciding with second lens 7 |
| 24 | fifth optical element |
| 24a | front surface of the fifth optical element 24 |
| 24b | back surface of the fifth optical element 24 |
| 25 | sixth optical element |
| 25b | back surface of sixth optical element |
| 26 | gap between first and second combined optical units |
| 27 | optical bridge, specifically a Hyperbolic-Meso-Aspheric-Fresnel Bridge (HMAFB) |

**Claims**

1. Optical device (1) for controlling a Gaussian light beam (2), the optical device (1) comprising:

    - a beam shaping unit (3);

- a lens system (4); and
- a focusing unit (5);
wherein the lens system comprises a first lens (6) and a second lens (7), wherein each of the first lens (6) and the second lens (7) comprises a stepped optical surface (8) formed by active sections (9) and reset sections (10) alternating with each other, wherein the active sections (9) stepwise form a surface profile (11), which is aspheric; **characterized in that**

the beam shaping unit (3) is configured for converting the Gaussian light beam into a flattened Gaussian beam, increasing the uniformity of the spatial intensity profile of the light beam (2);
the stepped optical surface (8) of the first lens (6) faces the stepped optical surface (8) of the second lens (7); and **in that** the surface profile (11) stepwise formed by the active sections (9) of respectively the first lens (6) and/or the second lens (7) is substantially oblate elliptical in a cross-section through a symmetry axis (12) of the respective first lens (6) and/or second lens (7).

2. Optical device (1) according to claim 1, **characterized in that** the surface profile (11) stepwise formed by the active sections (9) of the first lens (6) is defined by the sag z(r) in a cross-section through a symmetry axis (12) of the surface profile (11), with r being the displacement from the symmetry axis (12) of the surface profile (11), wherein

$$z = \frac{cr^2}{1+\sqrt{1-(1+k)c^2r^2}} + \alpha_1 r^2 + \alpha_2 r^4 + \alpha_3 r^6 + \alpha_4 r^8 + \alpha_5 r^{10} + \alpha_6 r^{12} + \alpha_7 r^{14} + \alpha_8 r^{16}$$

wherein

the radius of curvature R=1/c is between 2.5 and 130,
the conic constant k is between 0.005 and 3,
the absolute value of $\alpha_1$ is between 0 and 0.1,
the absolute value of $\alpha_2$ is between 0 and 0.1, and
the absolute value $\alpha_i$ is between 0 and 0.01 for (i=3, 4, 5, 6, 7, 8).

3. Optical device (1) according to any one of the previous claims, **characterized in that** the surface profile (11) stepwise formed by the active sections (9) of the second lens (7) is defined by the sag z(r) in a cross-section through a symmetry axis (12) of the surface profile (11), with r being the displacement from the symmetry axis (12) of the surface profile (11), wherein

$$z = \frac{cr^2}{1+\sqrt{1-(1+k)c^2r^2}} + \alpha_1 r^2 + \alpha_2 r^4 + \alpha_3 r^6 + \alpha_4 r^8 + \alpha_5 r^{10} + \alpha_6 r^{12} + \alpha_7 r^{14} + \alpha_8 r^{16}$$

wherein

the radius of curvature R=1/c is between 2.5 and 130,
the conic constant k is between 0.01 and 5,
the absolute value of $\alpha_1$ is between 0 and 0.1,
the absolute value of $\alpha_2$ is between 0 and 0.1, and
the absolute value of $\alpha_i$ is between 0 and 0.01 for (i=3, 4, 5, 6, 7, 8).

4. Optical device (1) according to any one of the previous claims, **characterized in that**
the beam shaping unit (3) and the first lens (6)are fixedly joined together to form a first combined optical unit (18) through which the light beam (2) can pass through both the beam shaping unit (3) and the first lens (6) along a light propagation axis of the first combined optical unit (18) ; and/or the focussing unit (5) and the second lens(7)are fixedly joined together to form a second combined optical unit (19) through which the light beam (2) can pass through both the focussing unit (5) and the second lens(7) along a light propagation axis of the second combined optical unit (19).

5. Optical device (1) according to claim 4, **characterized in that** the first combined optical unit (18) comprises:

a first optical element (20) having aspheric-conic front surface (20a) for initial alteration of the phase and amplitude of the incident light beam when it enters the first optical element (20) through the front surface;
a second optical element (21) having a different refractive index than the first optical element (20) and having an extended-aspheric structure to refract the light beam by the second optical element (21) in a manner defined by the structure; and

a third optical element (22; 6) being or comprising the first lens (6).

6. Optical device (1) according to claim 5, **characterized in that** the first lens (6) is a conic-aspheric-Fresnel element for parallelizing the light beam by the third optical element (22; 6) and for defining a specific direction along which the parallelized light beam leaves the first combined optical unit (18) towards the second combined optical unit (19) after its propagation through the third optical element (22; 6).

7. Optical device (1) according to claim 5 or 6, **characterized in that** the first optical element (20) is a rotational-symmetric or cylindrical-symmetric optical element, wherein its front surface (20a)has an even-aspheric structure and its back surface (20b)located opposite to the front surface (20a)has an extended aspheric structure.

8. Optical device (1) according to claim 7, **characterized in that** the first optical element (20) has at least one of the following properties:

- its front surface (20a) has a radius of curvature between 2.5 mm and 1500 mm;
- its back surface (20b)has a radius of curvature between -1000 mm and 1000 mm;
- it comprises a medium having a refractive index n with $1.45 \le n \le 2$ and a thickness d with $1\,mm \le d \le 250\,mm$;
- a conic constant k of its aspheric-conic front surface (20a) is between 0.01 and 5;
- for the zag z(r) of the even-aspheric structure, the absolute value of its second-order coefficient $\alpha_2$ is between 0 and 0.1, the absolute value of the fourth-order coefficient $\alpha_4$ is between 0 and 0.1, and/or the absolute value of each of its even-order coefficients $\alpha_{2i}$ for $i \in \{3,4,5,6,7,8\}$is between 0 and 0.1.

9. Optical device (1) according to any one of claims 5 to 8, **characterized in that** the second optical element (21) has a front surface (21a) that faces the first optical element (20) and has an extended aspheric structure.

10. Optical device (1) according to claim 9, **characterized in that** the second optical element (21) has at least one of the following properties:

- its front surface (21a) has a radius of curvature between -1000 mm and 1000 mm;
- it comprises a medium having a refractive index n with $1.45 \le n \le 2.2$ and a thickness d with $1\,mm \le d \le 500\,mm$;
- a conic constant k of its extended-aspheric structure is between 0.01 and 1;
- for the zag z(r) of the extended aspheric structure the absolute value of its second-order coefficient $\alpha_2$ is between 0 and 0.1, the absolute value of its fourth-order coefficient $\alpha_4$ is between 0 and 0.1, and/or the absolute value of each of its even-order coefficients $\alpha_{2i}$ for $i \in \{3,4,5,6,7,8\}$ is between 0 and 0.1.

11. Optical device (1) according to any one of claims 4 to 10, **characterized in that** the first lens (6) has at least one of the following properties:

- a radius of curvature of its stepped optical surface is between 2.5 mm and 130 mm,
- a conic constant k of its stepped optical surface is is between 0.005 and 3;
- for the zag z(r) of its stepped optical surface, the absolute value of its first-order coefficient $\alpha_1$ is between 0 and 0.1, the absolute value of its second-order coefficient $\alpha_2$ is between 0 and 0.1, and/or
- the absolute value of each of its higher-order coefficients $\alpha_i$ for i E {3,4,5,6,7,8}is between 0 and 0.1.

12. Optical device (1) according to any one of claims 4 to 11, **characterized in that** the first combined optical unit (18) is configured to convert an incident light beam (2, 2a)in such a way into an output beam (2b) leaving the first combined optical unit (18) through the stepped surface of the first lens (6) that an intensity profile along a direction being perpendicular to a principal direction of the output beam can be mathematically described by a flattened-Gaussian beam, FGB, of low order as follows:

$$\psi_N(r,z) \approx \frac{w_N(0)}{w_N(z)} e^{\left(i\left(kz - \Phi_N(z) + \frac{k}{2R_N(z)}\right)\right)} e^{\left(\frac{-r^2}{w_N^2(z)}\right)} \times \sum_{n=0}^{N} C_n^N L_n\left[\frac{2r^2}{w_N^2(z)}\right] e^{\left(-2in\Phi_N(z)\right)}$$

for $(1 \le N \le 10)$;

wherein $L_n$ is the n-th Laguerre polynomial, $C_n^N$ is related to a binomial coefficient $\binom{m}{n}$ and is given by

$$C_n^N = (-1)^n \sum_{m=n}^{N} \frac{\binom{m}{n}}{2^m}$$, and a wavenumber, the beam spot size at an arbitrary point along the propagation axis of the FGB, the radius of the curvature, and the phase shift are given by $k$, $w_N(z)$, $R_N(z)$ and $\Phi_n(z)$, respectively, with:

$$k = \frac{2\pi}{\lambda}, \quad w_N(z) = w_N(0)\sqrt{1 + \left(\frac{\lambda z}{\pi w_N^2(0)}\right)^2}, \quad R_N(z) = z\left(1 + \left(\frac{\pi w_N^2(0)}{\lambda z}\right)^2\right),$$

and

$$\Phi_N(z) = arctan\left[\frac{\lambda z}{\pi w_N^2(0)}\right];$$

and
wherein $w_N(0)$ is a spot size at the coordinate z=0 along the principal direction of the beam, wherein the coordinate z=0 is related to the beam waist of the FGB, $w_0$, through $w_N(0) = \frac{w_0}{\sqrt{N}}$.

13. Optical device (1) according to any one of claims 4 to 12, **characterized in that** the second combined optical unit (19) comprises:

a fourth optical element (23; 7) being or comprising the second lens (7);
a fifth optical element (24) having an even-aspheric structure for its front surface facing the fourth optical element (23; 7);
and
a sixth optical element (25) having an extended-conic-aspheric back surface facing away from the fifth optical element (24).

14. Optical device (1) according to claim 13, **characterized in that** the second lens (7) is a conic-aspheric-Fresnel element.

15. Optical device (1) according to claim 14, **characterized in that** the second lens (7) has at least one of the following properties:

- its stepped front surface (8) facing the first lens (6) has a radius of curvature between 5 mm and 260 mm;
- a conic constant k of the stepped front surface (8) is between 0.001 and 1.5;
- for the zag z(r) of the stepped front surface (8), the absolute value of its first-order coefficient $\alpha_1$ is between 0 and 0.1, the absolute value of its second-order coefficient $\alpha_2$ is between 0 and 0.1, and/or the absolute value of each of its higher-order coefficients $\alpha_i$ for i $\in$ {3,4,5,6,7,8} is between 0 and 0.1.

16. Optical device (1) according to any one of claims 13 to 15, **characterized in that** the fifth optical element (24) is a rotational-symmetric or cylindrical-symmetric optical element, wherein its front surface (24a) has an even-aspheric structure and its back surface (24b) located opposite to the front surface (24a) has an extended aspheric structure.

17. Optical device (1) according to claim 16, **characterized in that** the fifth optical element (24) has at least one of the following properties:

- its front surface (24a) has a radius of curvature between 1.25 mm and 1000 mm;
- its back surface (24b) has a radius of curvature between - 1000 mm and 1000 mm;
- it comprises a medium having a refractive index n with $1.45 \leq n \leq 2.2$ and a thickness d with $1\,mm \leq d \leq 500\,mm$;
- a conic constant k of its extended-aspheric structure is between 0.01 and 1;
- for the zag z(r) of the even aspheric structure of the front surface (24a) the absolute value of its second-order coefficient $\alpha_2$ is between 0 and 0.1, the absolute value of its fourth-order coefficient $\alpha_4$ is between 0 and 0.1, and/or

the absolute value of each of its even-order coefficients $\alpha_{2i}$ for i $\in$ {3,4,5,6,7,8} is between 0 and 0.1.

18. Optical device (1) according to any one of claims 13 to 17, **characterized in that** the sixth optical element (25) has at least one of the following properties:

- its back surface (25b)has a radius of curvature between - 10000 mm and 10000 mm;
- it comprises a medium having a refractive index n with 1.2 ≤ n ≤ 3 and a thickness d with 1 mm ≤ d ≤ 1000 mm;
- a conic constant k of its extended-aspheric structure is between 0.01 and 1;
- for the zag z(r) of the even aspheric structure of the front surface the absolute value of its second-order coefficient $\alpha_2$ is between 0 and 0.1, the absolute value of its fourth-order coefficient $\alpha_4$ is between 0 and 0.1, and/or the absolute value of each of its even-order coefficients $\alpha_{2i}$ for i E {3,4,5,6,7,8} is between 0 and 0.1.

19. Optical device (1) according to any one of claims 4 to 18, wherein the first combined optical unit (18) and the second combined optical unit (19) are separated from each other by a gap (26)between the stepped optical surface (8) of the first lens (6) and the stepped optical surface (8) of the second lens (7), which face each other, so that the first combined optical unit (18) and the second combined optical unit (19) jointly define an optical bridge (27).

**Patentansprüche**

1. Optische Vorrichtung (1) zum Steuern eines Gaußschen Lichtstrahls (2), wobei die optische Vorrichtung (1) aufweist:

- eine Strahlformungseinheit (3);
- ein Linsensystem (4); und
- eine Fokussiereinheit (5);

wobei das Linsensystem eine erste Linse (6) und eine zweite Linse (7) umfasst, wobei sowohl die erste Linse (6) als auch die zweite Linse (7) eine abgestufte optische Oberfläche (8) aufweisen, die durch abwechselnd angeordnete aktive Abschnitte (9) und Rücksetzabschnitte (10) gebildet wird, wobei die aktiven Abschnitte (9) stufenweise ein Oberflächenprofil (11) bilden, das asphärisch ist;
**dadurch gekennzeichnet, dass**

die Strahlformungseinheit (3) eingerichtet ist, den Gaußschen Lichtstrahl in einen abgeflachten Gaußschen Strahl umzuwandeln um die Gleichmäßigkeit des räumlichen Intensitätsprofils des Lichtstrahls (2) zu erhöhen;
die abgestufte optische Oberfläche (8) der ersten Linse (6) der abgestuften optischen Oberfläche (8) der zweiten Linse (7) zugewandt ist; und
dass das durch die aktiven Abschnitte (9) der ersten Linse (6) und/oder der zweiten Linse (7) stufenweise gebildete Oberflächenprofil (11) in einem Querschnitt durch eine Symmetrieachse (12) der jeweiligen ersten Linse (6) und/oder zweiten Linse (7) im Wesentlichen abgeflacht elliptisch ist.

2. Optische Vorrichtung (1) nach Anspruch 1, **dadurch gekennzeichnet, dass** das durch die aktiven Abschnitte (9) der ersten Linse (6) stufenweise gebildete Oberflächenprofil (11) durch den Sag z(r) in einem Querschnitt durch eine Symmetrieachse (12) des Oberflächenprofils (11) definiert ist, wobei r der Abstand von der Symmetrieachse (12) des Oberflächenprofils (11) ist, und wobei

$$z = \frac{cr^2}{1 + \sqrt{1 - (1+k)c^2r^2}} + \alpha_1 r^2 + \alpha_2 r^4 + \alpha_3 r^6 + \alpha_4 r^8 + \alpha_5 r^{10} + \alpha_6 r^{12} + \alpha_7 r^{14} + \alpha_8 r^{16}$$

wobei

der Krümmungsradius R = 1/c zwischen 2,5 und 130 liegt,
die konische Konstante k zwischen 0,005 und 3 liegt,
der Betrag von $\alpha_1$ zwischen 0 und 0,1 liegt,
der Betrag von $\alpha_2$ zwischen 0 und 0,1 liegt und
der Betrag von $\alpha_i$ zwischen 0 und 0,01 liegt für (i = 3, 4, 5, 6, 7, 8).

3. Optische Vorrichtung (1) nach einem der vorhergehenden Ansprüche, **dadurch gekennzeichnet, dass** das durch die aktiven Abschnitte (9) der zweiten Linse (7) stufenweise gebildete Oberflächenprofil (11) durch den Sag z(r) in einem Querschnitt durch eine Symmetrieachse (12) des Oberflächenprofils (11) definiert ist, wobei r der Abstand von der Symmetrieachse (12) des Oberflächenprofils (11) ist, und wobei

$$z = \frac{cr^2}{1 + \sqrt{1 - (1+k)c^2 r^2}} + \alpha_1 r^2 + \alpha_2 r^4 + \alpha_3 r^6 + \alpha_4 r^8 + \alpha_5 r^{10} + \alpha_6 r^{12} + \alpha_7 r^{14} + \alpha_8 r^{16}$$

wobei

der Krümmungsradius R = 1/c zwischen 2,5 und 130 liegt,
die konische Konstante k zwischen 0,01 und 5 liegt,
der Betrag von $\alpha_1$ zwischen 0 und 0,1 liegt,
der Betrag von $\alpha_2$ zwischen 0 und 0,1 liegt und
der Betrag von $\alpha_i$ zwischen 0 und 0,01 liegt für (i = 3, 4, 5, 6, 7, 8).

4. Optische Vorrichtung (1) nach einem der vorhergehenden Ansprüche, **dadurch gekennzeichnet, dass**

die Strahlformungseinheit (3) und die erste Linse (6) fest miteinander verbunden sind, um eine erste kombinierte optische Einheit (18) zu bilden, durch welche der Lichtstrahl (2) sowohl durch die Strahlformungseinheit (3) als auch durch die erste Linse (6) entlang einer Lichtausbreitungsachse der ersten kombinierten optischen Einheit (18) hindurchtreten kann; und/oder
die Fokussiereinheit (5) und die zweite Linse (7) fest miteinander verbunden sind, um eine zweite kombinierte optische Einheit (19) zu bilden, durch welche der Lichtstrahl (2) sowohl durch die Fokussiereinheit (5) als auch durch die zweite Linse (7) entlang einer Lichtausbreitungsachse der zweiten kombinierten optischen Einheit (19) hindurchtreten kann.

5. Optische Vorrichtung (1) nach Anspruch 4, **dadurch gekennzeichnet, dass** die erste kombinierte optische Einheit (18) umfasst:

ein erstes optisches Element (20) mit einer asphärisch-konischen Vorderfläche (20a) zur anfänglichen Änderung der Phase und Amplitude des einfallenden Lichtstrahls, wenn dieser durch die Vorderfläche in das erste optische Element (20) eintritt;
ein zweites optisches Element (21) mit einem anderen Brechungsindex als das erste optische Element (20) und mit einer erweiterten asphärischen Struktur, um den Lichtstrahl durch das zweite optische Element (21) in einer durch die Struktur definierten Weise zu brechen; und
ein drittes optisches Element (22; 6), das die erste Linse (6) ist oder diese umfasst.

6. Optische Vorrichtung (1) nach Anspruch 5, **dadurch gekennzeichnet, dass** die erste Linse (6) ein konisch-asphärisches Fresnel-Element ist, das den Lichtstrahl durch das dritte optische Element (22; 6) parallelisiert und eine bestimmte Richtung definiert, entlang der der parallelisierte Lichtstrahl nach seiner Ausbreitung durch das dritte optische Element (22; 6) die erste kombinierte optische Einheit (18) in Richtung der zweiten kombinierten optischen Einheit (19) verlässt.

7. Optische Vorrichtung (1) nach Anspruch 5 oder 6, **dadurch gekennzeichnet, dass** das erste optische Element (20) ein rotationssymmetrisches oder zylindersymmetrisches optisches Element ist, wobei seine Vorderfläche (20a) eine eben-asphärische Struktur aufweist und seine der Vorderfläche (20a) gegenüberliegende Rückfläche (20b) eine erweiterte asphärische Struktur aufweist.

8. Optische Vorrichtung (1) nach Anspruch 7, **dadurch gekennzeichnet, dass** das erste optische Element (20) mindestens eine der folgenden Eigenschaften aufweist:

- seine Vorderfläche (20a) hat einen Krümmungsradius zwischen 2,5 mm und 1500 mm;
- seine Rückfläche (20b) hat einen Krümmungsradius zwischen -1000 mm und 1000 mm;
- es weist ein Medium auf mit einem Brechungsindex n mit $1{,}45 \leq n \leq 2$ und einer Dicke d mit $1\text{ mm} \leq d \leq 250\text{ mm}$;
- eine konische Konstante k seiner asphärisch-konischen Vorderfläche (20a) liegt zwischen 0,01 und 5;

- für den Sag z(r) der eben-asphärischen Struktur liegt der Betrag seines Koeffizienten zweiter Ordnung $\alpha_2$ zwischen 0 und 0,1, der Betrag seines Koeffizienten vierter Ordnung $\alpha_4$ zwischen 0 und 0,1 und/oder der Betrag jedes seiner geradzahligen Koeffizienten $\alpha_{2i}$ für i ∈ {3, 4, 5, 6, 7, 8} zwischen 0 und 0,1.

9. Optische Vorrichtung (1) nach einem der Ansprüche 5 bis 8, **dadurch gekennzeichnet, dass** das zweite optische Element (21) eine Vorderfläche (21a) aufweist, die der ersten Linse (20) zugewandt ist, und eine erweiterte asphärische Struktur aufweist.

10. Optische Vorrichtung (1) nach Anspruch 9, **dadurch gekennzeichnet, dass** das zweite optische Element (21) mindestens eine der folgenden Eigenschaften aufweist:

   - seine Vorderfläche (21a) hat einen Krümmungsradius zwischen -1000 mm und 1000 mm;
   - es weist ein Medium auf mit einem Brechungsindex n mit $1,45 \leq n \leq 2,2$ und einer Dicke d mit $1\,mm \leq d \leq 500\,mm$;
   - eine konische Konstante k seiner erweiterten asphärischen Struktur liegt zwischen 0,01 und 1;
   - für den Sag z(r) der erweiterten asphärischen Struktur liegt der Betrag seines Koeffizienten zweiter Ordnung $\alpha_2$ zwischen 0 und 0,1, der Betrag seines Koeffizienten vierter Ordnung $\alpha_4$ zwischen 0 und 0,1 und/oder der Betrag jedes seiner geradzahligen Koeffizienten $\alpha_{2i}$ für i ∈ {3, 4, 5, 6, 7, 8} zwischen 0 und 0,1.

11. Optische Vorrichtung (1) nach einem der Ansprüche 4 bis 10, **dadurch gekennzeichnet, dass** die erste Linse (6) mindestens eine der folgenden Eigenschaften aufweist:

   - einen Krümmungsradius ihrer gestuften optischen Oberfläche zwischen 2,5 mm und 130 mm,
   - eine konische Konstante k ihrer gestuften optischen Oberfläche zwischen 0,005 und 3,
   - für den Sag z(r) ihrer gestuften optischen Oberfläche liegt der Betrag ihres Koeffizienten erster Ordnung $\alpha_1$ zwischen 0 und 0,1, der Betrag ihres Koeffizienten zweiter Ordnung $\alpha_2$ zwischen 0 und 0,1 und/oder
   - der Betrag jedes ihrer höherwertigen Koeffizienten $\alpha_i$ für i ∈ {3, 4, 5, 6, 7, 8} zwischen 0 und 0,1.

12. Optische Vorrichtung (1) nach einem der Ansprüche 4 bis 11, **dadurch gekennzeichnet, dass** die erste kombinierte optische Einheit (18) eingerichtet ist, einen einfallender Lichtstrahl (2, 2a) in einen Ausgangsstrahl (2b) umzuwandeln, der die erste kombinierte optische Einheit (18) durch die gestufte Oberfläche der ersten Linse (6) verlässt, derart, dass ein Intensitätsprofil entlang einer Richtung, die senkrecht zur Hauptausbreitungsrichtung des Ausgangsstrahls verläuft, mathematisch durch einen abgeflachten gaußschen Strahl, FGB, niedriger Ordnung wie folgt beschrieben werden kann:

$$\psi_N(r,z) \approx \frac{w_N(0)}{w_N(z)} e^{\left(i\left(kz - \Phi_N(z) + \frac{k}{2R_N(z)}\right)\right)} e^{\left(\frac{-r^2}{w_N^2(z)}\right)} \times \sum_{n=0}^{N} C_n^N L_n \left[\frac{2r^2}{w_N^2(z)}\right] e^{(-2in\Phi_N(z))}$$

für ($1 \leq N \leq 10$);

wobei $L_n$ das n-te Laguerre-Polynom ist, $C_n^N$ mit einem Binomialkoeffizienten zusammenhängt und gegeben ist durch $C_n^N = (-1)^n \sum_{m=n}^{N} \frac{\binom{m}{n}}{2^m}$, und die Wellenzahl, die Strahlbreite an einem beliebigen Punkt entlang der Ausbreitungsachse des FGB, der Krümmungsradius und die Phasenverschiebung durch $k$, $w_N(z)$, $R_N(z)$ und $\Phi_N(z)$, gegeben sind, wobei:

$$k = \frac{2\pi}{\lambda}, \quad w_N(z) = w_N(0)\sqrt{1 + \left(\frac{\lambda z}{\pi w_N^2(0)}\right)^2}, \quad R_N(z) = z\left(1 + \left(\frac{\pi w_N^2(0)}{\lambda z}\right)^2\right),$$

und

$$\Phi_N(z) = arctan\left[\frac{\lambda z}{\pi w_N^2(0)}\right];$$

und
wobei $w_N(0)$ die Strahlbreite an der Koordinate (z = 0) entlang der Hauptausbreitungsrichtung des Strahls ist, und die Koordinate (z = 0) mit dem Strahlbündelumfang des FGB, $w_0$, durch $w_N(0) = \frac{w_0}{\sqrt{N}}$ zusammenhängt.

13. Optische Vorrichtung (1) nach einem der Ansprüche 4 bis 12, **dadurch gekennzeichnet, dass** die zweite kombinierte optische Einheit (19) umfasst:

ein viertes optisches Element (23; 7), das die zweite Linse (7) ist oder diese umfasst;
ein fünftes optisches Element (24) mit einer eben-asphärischen Struktur für seine der vierten Linse (23; 7) zugewandte Vorderfläche; und
ein sechstes optisches Element (25) mit einer erweiterten konisch-asphärischen Rückfläche, die von dem fünften optischen Element (24) wegzeigt.

14. Optische Vorrichtung (1) nach Anspruch 13, **dadurch gekennzeichnet, dass** die zweite Linse (7) ein konisch-asphärisches Fresnel-Element ist.

15. Optische Vorrichtung (1) nach Anspruch 14, **dadurch gekennzeichnet, dass** die zweite Linse (7) mindestens eine der folgenden Eigenschaften aufweist:

- ihre gestufte Vorderfläche (8), die der ersten Linse (6) zugewandt ist, hat einen Krümmungsradius zwischen 5 mm und 260 mm;
- eine konische Konstante k der gestuften Vorderfläche (8) liegt zwischen 0,001 und 1,5;
- für den Sag z(r) der gestuften Vorderfläche (8) liegt der Betrag ihres Koeffizienten erster Ordnung $\alpha_1$ zwischen 0 und 0,1, der Betrag ihres Koeffizienten zweiter Ordnung $\alpha_2$ zwischen 0 und 0,1 und/oder der Betrag jedes ihrer höherwertigen Koeffizienten $\alpha_i$ für i $\in$ {3, 4, 5, 6, 7, 8} zwischen 0 und 0,1.

16. Optische Vorrichtung (1) nach einem der Ansprüche 13 bis 15, **dadurch gekennzeichnet, dass** das fünfte optische Element (24) ein rotationssymmetrisches oder zylindersymmetrisches optisches Element ist, wobei seine Vorderfläche (24a) eine eben-asphärische Struktur aufweist und seine der Vorderfläche (24a) gegenüberliegende Rückfläche (24b) eine erweiterte asphärische Struktur aufweist.

17. Optische Vorrichtung (1) nach Anspruch 16, **dadurch gekennzeichnet, dass** das fünfte optische Element (24) mindestens eine der folgenden Eigenschaften aufweist:

- seine Vorderfläche (24a) hat einen Krümmungsradius zwischen 1,25 mm und 1000 mm;
- seine Rückfläche (24b) hat einen Krümmungsradius zwischen -1000 mm und 1000 mm;
- es weist ein Medium auf mit einem Brechungsindex n mit $1{,}45 \leq n \leq 2{,}2$ und einer Dicke d mit $1\,mm \leq d \leq 500\,mm$;
- eine konische Konstante k seiner erweiterten asphärischen Struktur liegt zwischen 0,01 und 1;
- für den Sag z(r) der eben-asphärischen Struktur der Vorderfläche (24a) liegt der Betrag des Koeffizienten zweiter Ordnung $\alpha_2$ zwischen 0 und 0,1, der Betrag des Koeffizienten vierter Ordnung $\alpha_4$ zwischen 0 und 0,1 und/oder der Betrag jedes geradzahligen Koeffizienten $\alpha_{2i}$ für i $\in$ {3, 4, 5, 6, 7, 8} zwischen 0 und 0,1.

18. Optische Vorrichtung (1) nach einem der Ansprüche 13 bis 17, **dadurch gekennzeichnet, dass** das sechste optische Element (25) mindestens eine der folgenden Eigenschaften aufweist:

- seine Rückfläche (25b) hat einen Krümmungsradius zwischen -10000 mm und 10000 mm;
- es umfasst ein Medium mit einem Brechungsindex n mit $1{,}2 \leq n \leq 3$ und einer Dicke d mit $1\,mm \leq d \leq 1000\,mm$;
- eine konische Konstante k seiner erweiterten asphärischen Struktur liegt zwischen 0,01 und 1;
- für den Sag z(r) der eben-asphärischen Struktur der Vorderfläche liegt der Betrag des Koeffizienten zweiter Ordnung $\alpha_2$ zwischen 0 und 0,1, der Betrag des Koeffizienten vierter Ordnung $\alpha_4$ zwischen 0 und 0,1 und/oder der Betrag jedes geradzahligen Koeffizienten $\alpha_{2i}$ für i $\in$ {3, 4, 5, 6, 7, 8} zwischen 0 und 0,1.

19. Optische Vorrichtung (1) nach einem der Ansprüche 4 bis 18, wobei die erste kombinierte optische Einheit (18) und die zweite kombinierte optische Einheit (19) durch einen Spalt (26) zwischen der sich einander zuwendenden gestuften optischen Oberfläche (8) der ersten Linse (6) und der gestuften optischen Oberfläche (8) der zweiten Linse (7) voneinander getrennt sind, sodass die erste kombinierte optische Einheit (18) und die zweite kombinierte optische Einheit (19) gemeinsam eine optische Brücke (27) definieren.

**Revendications**

1. Dispositif optique (1) pour contrôler un faisceau de lumière gaussien (2), le dispositif optique (1) comprenant :

   - une unité de mise en forme de faisceau (3) ;
   - un système de lentilles (4) ; et
   - une unité de focalisation (5) ;

   dans lequel le système de lentilles comprend une première lentille (6) et une deuxième lentille (7), dans lequel chacune de la première lentille (6) et de la deuxième lentille (7) comprend une surface optique à épaulements (8) formée par des sections actives (9) et des sections de recalage (10) alternant les unes avec les autres, dans lequel les sections actives (9) forment de manière échelonnée un profil de surface (11), qui est asphérique ;
   **caractérisé en ce que**

   l'unité de mise en forme de faisceau (3) est configurée pour convertir le faisceau de lumière gaussien en un faisceau gaussien aplati, augmentant l'uniformité du profil d'intensité spatial du faisceau de lumière (2) ;
   la surface optique à épaulements (8) de la première lentille (6) est en regard de la surface optique à épaulements (8) de la deuxième lentille (7) ; et
   **en ce que** le profil de surface (11) formé de manière échelonnée par les sections actives (9) respectivement de la première lentille (6) et/ou de la deuxième lentille (7) est sensiblement elliptique oblate dans une section transversale passant par un axe de symétrie (12) de la première lentille (6) et/ou de la deuxième lentille (7) respectives.

2. Dispositif optique (1) selon la revendication 1, **caractérisé en ce que** le profil de surface (11) formé de manière échelonnée par les sections actives (9) de la première lentille (6) est défini par l'affaissement z(r) dans une section transversale passant par un axe de symétrie (12) du profil de surface (11), avec r étant le déplacement par rapport à l'axe de symétrie (12) du profil de surface (11), dans lequel

$$z = \frac{cr^2}{1+\sqrt{1-(1+k)c^2r^2}} + \alpha_1 r^2 + \alpha_2 r^4 + \alpha_3 r^6 + \alpha_4 r^8 + \alpha_5 r^{10} + \alpha_6 r^{12} + \alpha_7 r^{14} + \alpha_8 r^{16}$$

   dans lequel

   le rayon de courbure R=1/c est compris entre 2,5 et 130,
   la constante de conicité k est comprise entre 0,005 et 3,
   la valeur absolue de $\alpha_1$ est comprise entre 0 et 0,1,
   la valeur absolue de $\alpha_2$ est comprise entre 0 et 0,1, et
   la valeur absolue de $\alpha_i$ est comprise entre 0 et 0,01 pour (i = 3, 4, 5, 6, 7, 8).

3. Dispositif optique (1) selon l'une quelconque des revendications précédentes, **caractérisé en ce que** le profil de surface (11) formé de manière échelonnée par les sections actives (9) de la deuxième lentille (7) est défini par le fléchissement z(r) dans une section transversale passant par un axe de symétrie (12) du profil de surface (11), avec r étant le déplacement par rapport à l'axe de symétrie (12) du profil de surface (11), dans lequel

$$z = \frac{cr^2}{1+\sqrt{1-(1+k)c^2r^2}} + \alpha_1 r^2 + \alpha_2 r^4 + \alpha_3 r^6 + \alpha_4 r^8 + \alpha_5 r^{10} + \alpha_6 r^{12} + \alpha_7 r^{14} + \alpha_8 r^{16}$$

   **dans lequel**

   le rayon de courbure R=1/c est compris entre 2,5 et 130,
   la constante de conicité k est comprise entre 0,01 et 5,
   la valeur absolue de $\alpha_1$ est comprise entre 0 et 0,1,
   la valeur absolue de $\alpha_2$ est comprise entre 0 et 0,1, et
   la valeur absolue de $\alpha_i$ est comprise entre 0 et 0,01 pour (i = 3, 4, 5, 6, 7, 8).

4. Dispositif optique (1) selon l'une quelconque des revendications précédentes, **caractérisé en ce que** l'unité de mise en forme de faisceau (3) et la première lentille (6) sont assemblées de manière fixe pour former une première unité optique combinée (18) à travers laquelle le faisceau de lumière (2) peut traverser à la fois l'unité de mise en forme de faisceau (3) et la première lentille (6) le long d'un axe de propagation de lumière de la première unité optique combinée (18) ; et/ou

l'unité de focalisation (5) et la deuxième lentille (7) sont assemblées de manière fixe pour former une deuxième unité optique combinée (19) à travers laquelle le faisceau de lumière (2) peut traverser à la fois l'unité de focalisation (5) et la deuxième lentille (7) le long d'un axe de propagation de lumière de la deuxième unité optique combinée (19).

5. Dispositif optique (1) selon la revendication 4, **caractérisé en ce que** la première unité optique combinée (18) comprend :

un premier élément optique (20) ayant une surface avant asphérique conique (20a) pour une modification initiale de la phase et de l'amplitude du faisceau de lumière incident lorsqu'il pénètre dans le premier élément optique (20) à travers la surface avant ;

un deuxième élément optique (21) ayant un indice de réfraction différent de celui du premier élément optique (20) et ayant une structure asphérique dite étendue pour réfracter le faisceau de lumière par le deuxième élément optique (21) d'une manière définie par la structure ; et un troisième élément optique (22 ; 6) étant ou comprenant la première lentille (6).

6. Dispositif optique (1) selon la revendication 5, **caractérisé en ce que** la première lentille (6) est un élément de Fresnel asphérique conique pour paralléliser le faisceau de lumière par le troisième élément optique (22 ; 6) et pour définir une direction spécifique le long de laquelle le faisceau de lumière parallélisé quitte la première unité optique combinée (18) vers la deuxième unité optique combinée (19) après sa propagation à travers le troisième élément optique (22 ; 6).

7. Dispositif optique (1) selon la revendication 5 ou 6, **caractérisé en ce que** le premier élément optique (20) est un élément optique à symétrie de rotation ou à symétrie cylindrique, dans lequel sa surface avant (20a) a une structure asphérique dite paire et sa surface arrière (20b) située à l'opposé de la surface avant (20a) a une structure asphérique dite étendue.

8. Dispositif optique (1) selon la revendication 7, **caractérisé en ce que** le premier élément optique (20) a au moins l'une des propriétés suivantes :

- sa surface avant (20a) a un rayon de courbure compris entre 2,5 mm et 1500 mm ;
- sa surface arrière (20b) a un rayon de courbure compris entre -1000 mm et 1000 mm ;
- il comprend un milieu ayant un indice de réfraction n avec $1,45 \leq n \leq 2$ et une épaisseur d avec $1\ mm \leq d \leq 250\ mm$ ;
- une constante de conicité k de sa surface avant asphérique conique (20a) est comprise entre 0,01 et 5 ;
- pour l'affaissement z(r) de la structure asphérique paire, la valeur absolue de son coefficient de deuxième ordre $\alpha_2$ est comprise entre 0 et 0,1, la valeur absolue du coefficient de quatrième ordre $\alpha_4$ est comprise entre 0 et 0,1, et/ou la valeur absolue de chacun de ses coefficients d'ordre pair $\alpha_{2i}$ pour i E {3, 4, 5, 6, 7, 8} est comprise entre 0 et 0,1.

9. Dispositif optique (1) selon l'une quelconque des revendications 5 à 8, **caractérisé en ce que** le deuxième élément optique (21) a une surface avant (21a) qui est en regard du premier élément optique (20) et a une structure asphérique étendue.

10. Dispositif optique (1) selon la revendication 9, **caractérisé en ce que** le deuxième élément optique (21) a au moins l'une des propriétés suivantes :

- sa surface avant (21a) a un rayon de courbure compris entre -1000 mm et 1000 mm ;
- il comprend un milieu ayant un indice de réfraction n avec $1,45 \leq n \leq 2,2$ et une épaisseur d avec $1\ mm \leq d \leq 500\ mm$ ;
- une constante de conicité k de sa surface avant asphérique étendue est comprise entre 0,01 et 1 ;
- pour l'affaissement z(r) de la structure asphérique étendue, la valeur absolue de son coefficient de deuxième ordre $\alpha_2$ est comprise entre 0 et 0,1, la valeur absolue de son coefficient de quatrième ordre $\alpha_4$ est comprise entre 0 et 0,1, et/ou la valeur absolue de chacun de ses coefficients d'ordre pair $\alpha_{2i}$ pour $i \in \{3, 4, 5, 6, 7, 8\}$ est comprise entre 0 et 0,1.

11. Dispositif optique (1) selon l'une quelconque des revendications 4 à 10, **caractérisé en ce que** la première lentille (6) a au moins l'une des propriétés suivantes :

- un rayon de courbure de sa surface optique à épaulements est compris entre 2,5 mm et 130 mm,
- une constante de conicité k de sa surface optique à épaulements est comprise entre 0,005 et 3 ;
- pour le fléchissement z(r) de sa surface optique à épaulements, la valeur absolue de son coefficient de premier ordre $\alpha_1$ est comprise entre 0 et 0,1, la valeur absolue de son coefficient de deuxième ordre $\alpha_2$ est comprise entre 0 et 0,1, et/ou
- la valeur absolue de chacun de ses coefficients d'ordre supérieur $\alpha_i$ pour i E {3, 4, 5, 6, 7, 8} est comprise entre 0 et 0,1.

12. Dispositif optique (1) selon l'une quelconque des revendications 4 à 11, **caractérisé en ce que** la première unité optique combinée (18) est configurée pour convertir un faisceau de lumière incident (2, 2a) en un faisceau de sortie (2b) quittant la première unité optique combinée (18) à travers la surface à épaulements de la première lentille (6), de sorte qu'un profil d'intensité le long d'une direction perpendiculaire à une direction principale du faisceau de sortie peut être mathématiquement décrit par un faisceau gaussien aplati, FGB, d'ordre inférieur comme suit :

$$\psi_N(r,z) \approx \frac{w_N(0)}{w_N(z)} e^{\left(i\left(kz - \Phi_N(z) + \frac{k}{2R_N(z)}\right)\right)} e^{\left(\frac{-r^2}{w_N^2(z)}\right)} \times \sum_{n=0}^{N} C_n^N L_n \left[\frac{2r^2}{w_N^2(z)}\right] e^{(-2in\Phi_N(z))}$$

pour $(1 \leq N \leq 10)$ ;

où $L_n$ est le nième polynôme de Laguerre, $C_n^N$ est lié à un coefficient binomial $\binom{m}{n}$ et est donné par la formule

$$C_n^N = (-1)^n \sum_{m=n}^{N} \frac{\binom{m}{n}}{2^m}$$, et un nombre d'onde, la dimension de tache de faisceau en un point arbitraire le long de l'axe de propagation du FGB, le rayon de la courbure et le déphasage sont donnés par $k$, $w_N(z)$, $R_N(z)$ et $\Phi_N(z)$, respectivement, avec :

$$k = \frac{2\pi}{\lambda}, \quad w_N(z) = w_N(0)\sqrt{1 + \left(\frac{\lambda z}{\pi w_N^2(0)}\right)^2}, \quad R_N(z) = z\left(1 + \left(\frac{\pi w_N^2(0)}{\lambda z}\right)^2\right) \text{ et } \Phi_N(z) = arctan\left[\frac{\lambda z}{\pi w_N^2(0)}\right] ;$$

et

dans lequel $w_N(0)$ est une dimension de tache à la coordonnée z = 0 le long de la direction principale du faisceau, où la coordonnée z = 0 se rapporte au col du faisceau du FGB, $w_0$, par l'intermédiaire de la formule $w_N(0) = \frac{w_0}{\sqrt{N}}$.

13. Dispositif optique (1) selon l'une quelconque des revendications 4 à 12, **caractérisé en ce que** la deuxième unité optique combinée (19) comprend :

un quatrième élément optique (23 ; 7) étant ou comprenant la deuxième lentille (7) ;
un cinquième élément optique (24) ayant une structure asphérique paire pour sa surface avant en regard du quatrième élément optique (23 ; 7) ; et
un sixième élément optique (25) ayant une surface arrière asphérique conique étendue opposée au cinquième élément optique (24).

14. Dispositif optique (1) selon la revendication 13, **caractérisé en ce que** la deuxième lentille (7) est un élément de Fresnel asphérique conique.

15. Dispositif optique (1) selon la revendication 14, **caractérisé en ce que** la deuxième lentille (7) a au moins l'une des propriétés suivantes :

- sa surface avant à épaulements (8) en regard de la première lentille (6) a un rayon de courbure compris entre 5 mm et 260 mm ;
- une constante de conicité k de la surface avant à épaulements (8) est comprise entre 0,001 et 1,5 ;
- pour l'affaissement z(r) de la surface avant à épaulements (8), la valeur absolue de son coefficient de premier

ordre $\alpha_1$ est comprise entre 0 et 0,1, la valeur absolue de son coefficient de deuxième ordre $\alpha_2$ est comprise entre 0 et 0,1, et/ou la valeur absolue de chacun de ses coefficients d'ordre supérieur $\alpha_i$ pour i $\in$ {3, 4, 5, 6, 7, 8} est comprise entre 0 et 0,1.

**16.** Dispositif optique (1) selon l'une quelconque des revendications 13 à 15, **caractérisé en ce que** le cinquième élément optique (24) est un élément optique à symétrie de rotation ou à symétrie cylindrique, dans lequel sa surface avant (24a) a une structure asphérique dite paire et sa surface arrière (24b) située à l'opposé de la surface avant (24a) a une structure asphérique dite étendue.

**17.** Dispositif optique (1) selon la revendication 16, **caractérisé en ce que** le cinquième élément optique (24) a au moins l'une des propriétés suivantes :

- sa surface avant (24a) a un rayon de courbure compris entre 1,25 mm et 1000 mm ;
- sa surface arrière (24b) a un rayon de courbure compris entre -1000 mm et 1000 mm ;
- il comprend un milieu ayant un indice de réfraction n avec $1{,}45 \leq n \leq 2{,}2$ et une épaisseur d avec $1\text{ mm} \leq d \leq 500$ mm ;
- une constante de conicité k de sa structure asphérique étendue est comprise entre 0,01 et 1 ;
- pour l'affaissement z(r) de la structure asphérique paire de la surface avant (24a), la valeur absolue de son coefficient de deuxième ordre $\alpha_2$ est comprise entre 0 et 0,1, la valeur absolue de son coefficient de quatrième ordre $\alpha_4$ est comprise entre 0 et 0,1, et/ou la valeur absolue de chacun de ses coefficients d'ordre pair $\alpha_{2i}$ pour i $\in$ {3, 4, 5, 6, 7, 8} est comprise entre 0 et 0,1.

**18.** Dispositif optique (1) selon l'une quelconque des revendications 13 à 17, **caractérisé en ce que** le sixième élément optique (25) a au moins l'une des propriétés suivantes :

- sa surface arrière (25b) a un rayon de courbure compris entre -10000 mm et 10000 mm ;
- il comprend un milieu ayant un indice de réfraction n avec $1{,}2 \leq n \leq 3$ et une épaisseur d avec $1\text{ mm} \leq d \leq 1000$ mm ;
- une constante de conicité k de sa structure asphérique étendue est comprise entre 0,01 et 1 ;
- pour l'affaissement z(r) de la structure asphérique paire de la surface avant, la valeur absolue de son coefficient de deuxième ordre $\alpha_2$ est comprise entre 0 et 0,1, la valeur absolue de son coefficient de quatrième ordre $\alpha_4$ est comprise entre 0 et 0,1, et/ou la valeur absolue de chacun de ses coefficients d'ordre pair $\alpha_{2i}$ pour i $\in$ {3, 4, 5, 6, 7, 8} est comprise entre 0 et 0,1.

**19.** Dispositif optique (1) selon l'une quelconque des revendications 4 à 18, dans lequel la première unité optique combinée (18) et la deuxième unité optique combinée (19) sont séparées l'une de l'autre par un interstice (26) entre la surface optique à épaulements (8) de la première lentille (6) et la surface optique à épaulements (8) de la deuxième lentille (7), qui sont en regard l'une de l'autre, de sorte que la première unité optique combinée (18) et la deuxième unité optique combinée (19) définissent conjointement un pont optique (27).

Fig. 1

Fig. 2

Fig. 3

Fig. 4

Fig. 5a

Fig. 6a

Fig. 6b

EP 4 264 336 B1

Fig. 6c

Fig. 6d

Fig. 6e

Fig. 6f

Fig. 7a

Fig. 7b

Fig. 7c

Fig. 7d

Fig. 7e

Fig. 7f

Fig. 8a

Fig. 8b

Fig. 8c

Fig. 9a

Fig. 9b

Fig. 9c

Fig. 10a

Fig. 10b

Fig. 10c

Fig. 10d

Fig. 11a

Fig. 11b

Fig. 11c

Fig. 11d

Object Explorer Properties

Save | Delete

Coating
None

Scatter
Scatter Model: No Scattering

Parameters
+Depth/-Freq
0,3

Pitch (deg)
20

Radius
20

Conic
1,5

Coeff r^2
0,0002

Coeff r^4
0,002

Coeff r^6
0

Coeff r^8
0

Coeff r^10
0

Coeff r^12
0

Coeff r^14
0

Coeff r^16
0

#Subsegments
20

Back Face (2)
Coat/Scatter

Profile:

▷ Object Explorer

Fig. 12

Fig. 13

18                      19

20   21   22          8        23    24   25

20a       8                 25b

20b, 21a             24a     24b

26

27

**Fig. 14A**

**Fig. 14B**

Fig. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005257735 A

**Non-patent literature cited in the description**

- Gaussian to Flat-Top Intensity Distributing Lens. David Shafer Optical Design, Inc., vol. 06430, 259-4929